# EUROPEAN PATENT APPLICATION

(11) **EP 4 502 289 A1**
(43) Date of publication of application: **05.02.2025**
(21) Application number: 23780036.2
(22) Date of filing: 23.03.2023
(51) Int. Cl.: E02F 9/16, B60H 1/00, B60H 1/22

(54) **WORK MACHINE**

(30) Priority: 31.03.2022 JP 2022060027; 31.03.2022 JP 2022060029
(71) Applicant: KUBOTA CORPORATION, Osaka-shi, Osaka 556-8601 (JP)
(72) Inventor: ITO Junki, Sakai-shi, Osaka 590-0908 (JP); TAMBA Daiki, Sakai-shi, Osaka 590-0908 (JP); SAKUTA Takuya, Sakai-shi, Osaka 590-0908 (JP)
(74) Representative: Cabinet Beau de Loménie
(86) International application number: PCT/JP2023/011483
(87) International publication number: WO 2023/190025

(57) **Abstract**

A working machine (1) includes a machine body (20), a working device (30) that is provided at the machine body (20), a component that is an operation room structure (40) mounted on the machine body (20) and that includes an operation room (41) and a floor surface body (42) constituting a floor surface of the operation room (41), and a heater (50) for heating the interior of the operation room (41). The heater (50) includes a heat generator (52b) that generates heat by using electric power and hot water circulators (51, 53) that cause water heated as a result of heat generation of the heat generator (52b) to circulate. Among components of the heater (50), at least the heat generator (52b) is disposed in a space in the machine body (20) below the floor surface body (42).

## Description

### Technical Field

The present invention relates to a working machine such as an excavator.

### Background Art

The working vehicle disclosed in PTL 1 includes, in its vehicle body, an engine and a traveling operation room and includes, as a heater for the traveling operation room, a lower hot-water heater having a structure in which hot water is circulated by a pump that is driven by the engine. The lower hot-water heater is disposed in a footwell area of a driver's seat in the traveling operation room.

In addition, an upper slewable working machine including a working device is freely slewably mounted on the vehicle body of working vehicle disclosed in PTL 1, and an upper hot-water heater having a structure in which hot water is circulated by a pump that is driven by an electric motor is provided as a heater for a working operation room of the upper slewable working machine. The upper hot-water heater is disposed in a footwell area of a driver's seat in the working operation room.

Both the upper hot-water heater and the lower hot-water heater disclosed in PTL 1 use cooling water of the engine as the hot water, that is, their heat source is the heat exhausted by the engine.

In the passenger car-type vehicle disclosed in PTL 2, an electric hot-water heater is installed in a space that is located on a floor of a vehicle cabin and under a seat.

PTL 3 discloses a vehicle air conditioner that includes a hot-water flow regulating valve.

Such a vehicle includes an operation member, such as a dial switch, such that a driver can freely adjust the temperature of a room or an operator's seat, and as described in PTL 3, a hot-water flow regulating valve regulates the flow rate of hot water in accordance with the operating position (operating amount) of the operation member, thereby adjusting the temperature of air that is blown into the room or the like.

### Citation List

### Patent Literature

PTL 1: Japanese Unexamined Patent Application Publication No. 2003-048685
PTL2: Japanese Unexamined Patent Application Publication No. 2014-226970
PTL 3: Japanese Unexamined Patent Application Publication No. 2005-028936

### Summary of Invention

### Technical Problem

In recent years, some working machines such as excavators (e.g., backhoes) are desired to include a prime mover that does not use combustion-based energy. In this case, a heater for an operation room, which is constituted by a cabin or the like provided on a working machine, is required not to rely on engine exhaust heat, and thus, it is desirable to use an electric hot-water heater such as that described in PTL 2.

One problem in order to keep the costs low is how to provide an efficient heater for the operation room of the working machine by using the electric hot-water heater with a limited heating capacity. In an operation room of a working machine, such as a backhoe, it may sometimes be difficult to ensure a sufficient installation space in the footwell area of a seat or the space under the seat such as that described in PTL 1 and PTL 2. The installation positions (particularly, the positions in a height direction) of a gas-liquid separation tank, which is connected to a hot-water circulation passage, and a refill port for water replenishment are limited in order to ensure the ease of tasks such as water filling, inspection, and the like, while these installation positions are influenced by the installation locations (particularly, installation locations in the height direction) of a main body including a heat generator, a pump, and so forth. Consequently, the main problem is the layout of the main body of the electric hot-water heater including the heat generator.

In addition, in order to enhance a heating effect, it is desirable to increase the cross-sectional area of a hot-water flow passage and to set a large maximum flow rate.

However, as described in PTL 3, in the case where the heating temperature is adjusted by flow rate control using a hot-water flow regulating valve, if such flow rate control is performed by using a flow path having a large cross-sectional area, there is a possibility that localized boiling will occur when the flow rate is significantly reduced.

### Solution to Problem

A working machine according to a first aspect of the present invention includes a machine body, a working device provided on the machine body, an operation room structure mounted on the machine body, the operation room structure including an operation room and a floor surface body to define a floor surface of the operation room, and a heater to heat an interior of the operation room. The heater includes a heat generator to generate heat by using electric power, and a hot water circulator to cause water heated as a result of heat generation of the heat generator to circulate. At least the heat generator among components of the heater is located in a space in the machine body below the floor surface body.

The working machine may include an operation member for indoor temperature adjustment located in the operation room. The hot water circulator may include a pump for delivery of hot water, the pump being to be driven by electric power. The operation member may also define an operation member operable to simultaneously set the heat generator and the pump to an energized state, and simultaneously set the heat generator and the pump to a non-energized state.

The operation member may be a dial switch operable to set a set temperature level that is changed by changing its operating position. The amount of heat generated by the heat generator may increase as the set temperature level set by the operation member increases.

The working machine may include an operator's seat provided in the operation room. The hot water circulator may include a flow regulating valve operable to change its opening to control a flow rate of hot water. An amount of heat generated by the heat generator is changed in accordance with a change in the opening of the flow regulating valve.

A working machine according to a second aspect of the present invention includes a machine body, a working device provided on the machine body, an operator's seat provided on or in the machine body, and a heater to heat an area around the operator's seat. The heater includes a heat generator to generate heat by using electric power, and a hot water circulator to cause water heated as a result of heat generation of the heat generator to circulate. The hot water circulator includes a flow regulating valve operable to change its opening to control a flow rate of hot water by changing its opening. An amount of heat generated by the heat generator is changed in accordance with a change in the opening of the flow regulating valve.

In the working machine according to the first aspect or the second aspect, the amount of heat generated by the heat generator may decrease as the opening of the flow regulating valve decreases.

The working machine according to the first aspect or the second aspect may include an operation member located around the operator's seat, the operation member being operable to change its operating position. The flow regulating valve may be operable to control the opening in accordance with the operating position of the operation member.

The operation member may be a dial switch operable to set a set temperature level that is changed by changing its operating position. The opening of the flow regulating valve may increase as the set temperature level set by the dial switch increases.

The working machine according to the first aspect or the second aspect may include a battery provided on or in the machine body and an electric motor provided on or in the machine body and to be driven by electric power supplied from the battery. The working device may be driven by an output of the electric motor. The heat generator may generate heat by using electric power supplied from the battery.

In the working machine according to the first aspect or the second aspect, the battery may define a main battery, and a sub-battery different from the main battery may be provided on or in the machine body. The sub-battery may be charged with electric power from the main battery. The heat generator generates heat by using electric power supplied from the sub-battery.

The working machine according to the first aspect or the second aspect may include a radiator to cool the battery and the electric motor. The radiator may include an electric radiator fan that is switchable between an energized state and a non-energized state.

The working machine according to the first aspect or the second aspect may include a hydraulic pump to deliver a hydraulic fluid by being driven by an output of the electric motor, a hydraulic actuator to cause the working device to operate by being driven by the hydraulic fluid, and a hydraulic fluid cooler to cool the hydraulic fluid. The hydraulic fluid cooler may include an electric hydraulic-fluid cooling fan that is switchable between an energized state and a non-energized state.

The working machine according to the first aspect or the second aspect may include a PTC heater defining the heat generator.

### Advantageous Effects of Invention

With the above-described working machine according to the first aspect, a layout of the heater that provides an efficient heating effect to the operation room and that is effective in improving the degree of freedom in arrangement of various equipment can be provided.

With the above-described working machine according to the second aspect, the amount of heat generated by the heat generator is also adjusted in accordance with the operating position of the dial or the like, and thus, the amount of heat generated by the heat generator is kept small when the flow rate is low, thereby avoiding unexpected boiling. In contrast, by increasing the amount of heat generated by the heat generator when the flow rate is increased by increasing the opening, the heating efficiency (hot water generation efficiency) can be improved when the water flow rate is high.

### Brief Description of Drawings

[FIG. 1] FIG. 1 is a left front perspective view of a slewable working machine (hereinafter simply referred to as a "working machine") that is an embodiment of a working machine.
[FIG. 2] FIG. 2 is a left side view of the working machine.
[FIG. 3] FIG. 3 is a plan view of the working machine.
[FIG. 4] FIG. 4 is a rear view of the working machine.
[FIG. 5] FIG. 5 is a perspective view illustrating a left front portion of a machine body of the working machine.
[FIG. 6] FIG. 6 is a perspective view of the left front portion of the machine body in a state where a lower side cover is removed.
[FIG. 7] FIG. 7 is an internal side view of the machine body and illustrates a structure of a heater.
[FIG. 8] FIG. 8 is an internal front view of the interior of the machine body and illustrates a structure of a bottom portion of a cabin.
[FIG. 9] FIG. 9 is an internal plan view of the machine body and illustrates the structure of the bottom portion of the cabin.
[FIG. 10] FIG. 10 is an internal plan view of the machine body and illustrates the structure of the bottom portion of the cabin in a state where a seat is removed.
[FIG. 11] FIG. 11 is an internal plan view of the machine body in a state where the bottom portion of the cabin is removed.
[FIG. 12] FIG. 12 is an enlarged plan view of a portion in the vicinity of the seat in the cabin and illustrates a temperature adjustment dial and the like.
[FIG. 13] FIG. 13 is a partial side view of the machine body in a state where the access door is open.
[FIG. 14] FIG. 14 is a left rear exploded perspective view of the machine body in a state where a plurality of covers are removed.
[FIG. 15] FIG. 15 is a right rear exploded perspective view of the machine body in a state where the plurality of covers are removed.
[FIG. 16] FIG. 16 is a right rear perspective view of the machine body in a state where a hood side cover is open.
[FIG. 17] FIG. 17 is a right front perspective view illustrating an arrangement structure of electrical equipment and the like in a rear hood.
[FIG. 18] FIG. 18 is a control block diagram of electrical equipment and the like relating to the heater in the working machine.

### Description of Embodiments

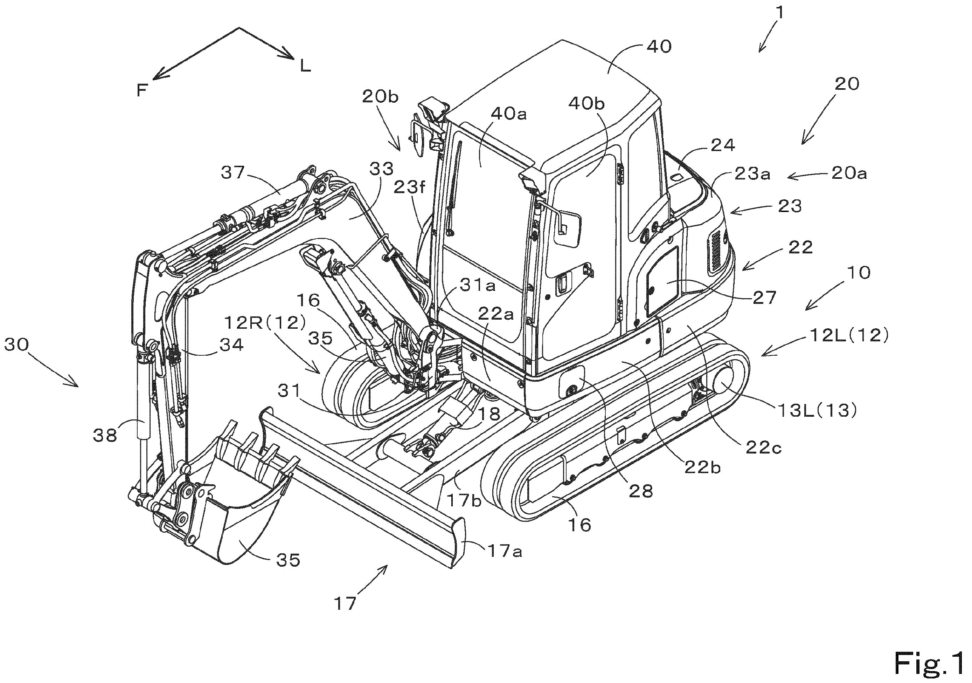

An embodiment of a working machine will be described below with reference to the drawings. FIG. 1 to FIG. 4 and the like illustrate a slewable working machine 1 that is an example of a working machine. In the following description, it will be simply referred to as a working machine 1.

The overall configuration of the working machine 1 will be described with reference to FIG. 1 to FIG. 4 and the like. The working machine 1 includes a traveling body 10, a slewing base 20 that is an example of a machine body and a working device 30. In the following description, the slewing base 20 will be referred to as a machine body 20.

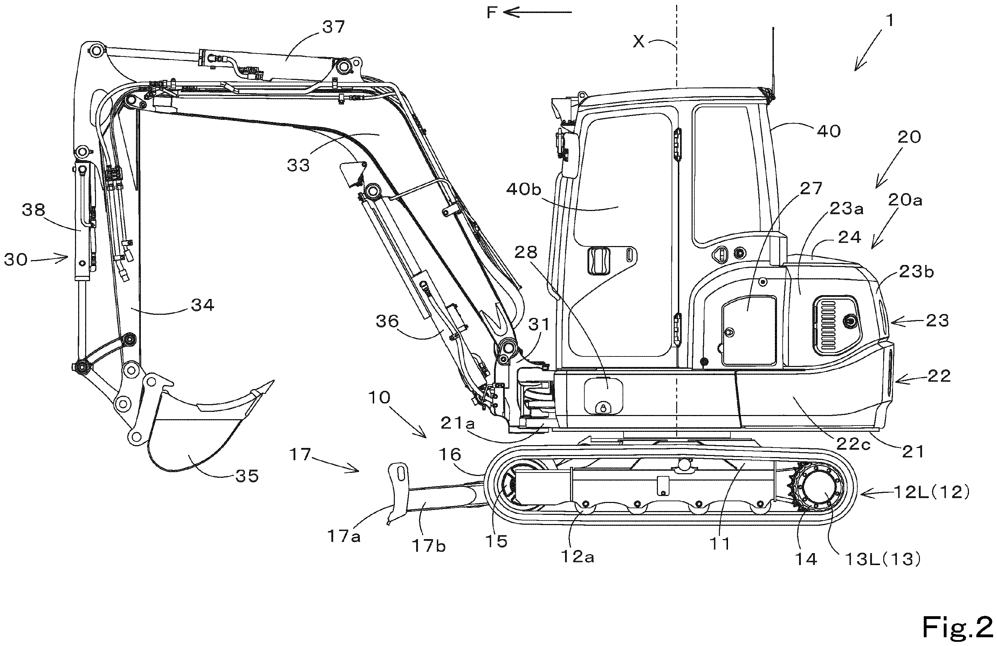

The machine body 20 is mounted on an upper portion of the traveling body 10 via a vertical slewing shaft (not illustrated). As illustrated in FIG. 2, it is mounted so as to be rotatable in the horizontal direction relative to the traveling body 10 about an axis X of the slewing shaft extending in the vertical direction.

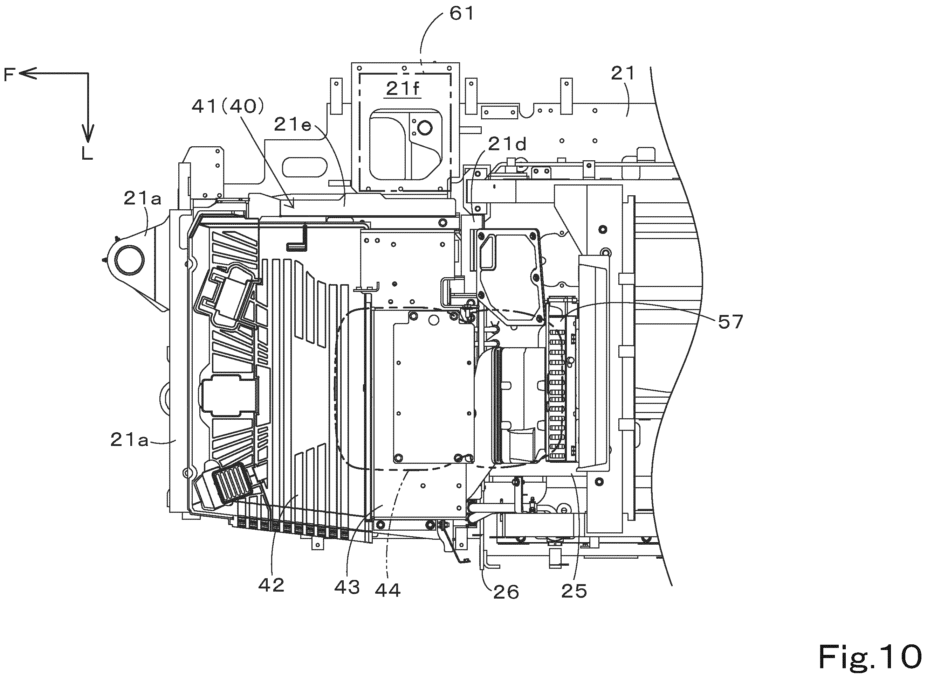

In the following description of the working machine 1, a "longitudinal direction" refers to the longitudinal direction of the machine body 20 regardless of the rotational position of the traveling body 10 relative to the machine body 20. In some of FIGS. 1 to 16, arrow F extends in a direction toward the front of the machine body 20. This direction matches the horizontal direction of an operator's line of sight, the operator sitting in an operator's seat 44 (described later) and facing forward. The horizontal direction that is opposite to arrow F is toward the rear side of the machine body 20.

In the following description of the working machine 1, a "transverse direction" refers to a transverse direction of the machine body 20 (the width direction of the machine body 20) regardless of the rotational position of the traveling body 10 relative to the machine body 20. In some of FIGS. 1 to 16, arrow L extends toward the left side of the machine body 20.

When arrow L is illustrated together with arrow F as in the drawings, arrow L extends leftward with respect to arrow F. The direction in which arrow L extends matches the horizontal left direction for the operator sitting in the operator's seat 44, which will be described later. The horizontal direction that is opposite to arrow L is toward the right of the machine body 20.

The front, rear, left, and right positions or directions of each component or each portion of the working machine 1 will hereinafter be described on the basis of the front, rear, left, and right directions of the machine body 20 as described above.

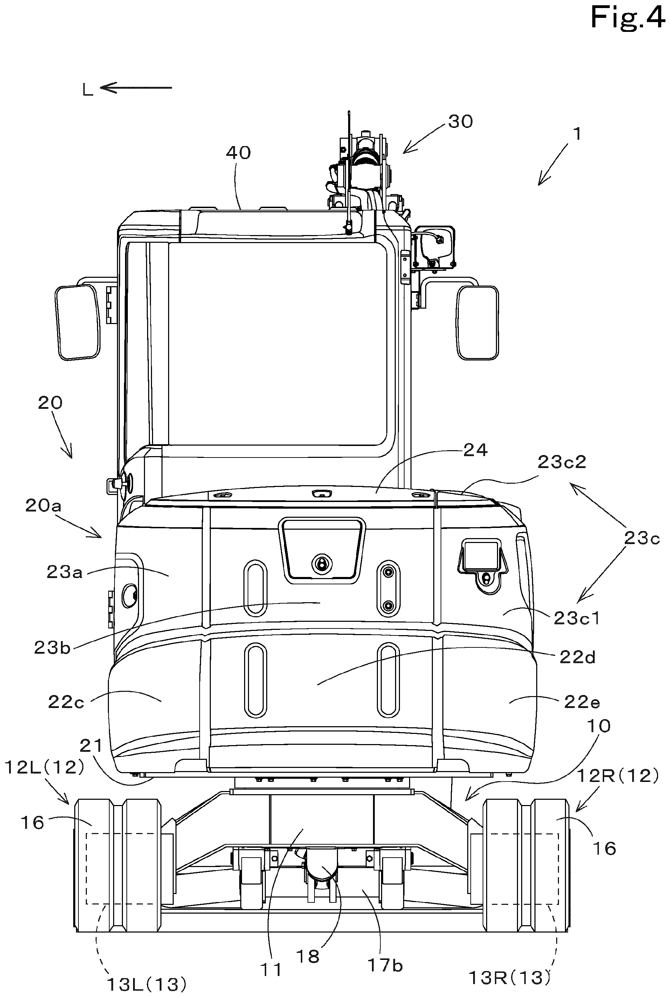

The traveling body 10 will be now be described below on the assumption that the longitudinal direction of the traveling body 10 and the longitudinal direction of the machine body 20 match each other. As illustrated in FIG. 2, FIG. 4, and the like, the traveling body 10 includes a traveling frame 11, a left traveling device 12L that is provided on the left of the traveling frame 11, and a right traveling device 12R that is provided on the right of the traveling frame 11. The left traveling device 12L and the right traveling device 12R will each be referred to as a traveling device 12.

As illustrated in FIG. 2 and the like, each of the traveling devices 12 is a crawler-type traveling device that includes a traveling motor 13, a rear wheel 14 serving as a drive sprocket, a front wheel 15 serving as a driven wheel, a plurality of track rollers 12a arranged between the rear wheel 14 and the front wheel 15, a crawler 16 wound around the rear wheel 14, the front wheel 15, and the track rollers 12a, and the like.

The traveling device 12 may be a tire-type traveling device that has a configuration different from that of a crawler-type traveling device and that includes, for example, tires serving as front and rear wheels without including a crawler.

The traveling motor 13 is provided so as to be coaxial with a rotation center axis of the rear wheel 14, which is a drive sprocket, and an output shaft of the traveling motor 13 extends so as to serve as the rotary shaft of the rear wheel 14. The output shaft of the traveling motor 13 may be operatively connected to the rotation center axis of the drive sprocket via a power train such as a reduction gear train or the like. In addition, the front wheel of the traveling device 12 may be used as a drive sprocket, and the output shaft of the traveling motor 13 may be operatively connected to the rotary shaft of the front wheel.

The traveling motor 13 is a hydraulic motor and uses, as its rotational power, the hydraulic pressure of a hydraulic fluid that is delivered from each of a pair of hydraulic pumps (not illustrated) driven by the output of an electric motor 92, which serves as a prime mover of the working machine 1 as will be described later.

Referring to FIG. 4, the traveling motor (hereinafter referred to as a "left traveling motor") 13L of the left traveling device 12L and the traveling motor (hereinafter referred to as a "right traveling motor") 13R of the right traveling device 12R have their rotational speeds and rotational directions that can be controlled independently of each other.

When the left traveling motor 13L and the right traveling motor 13R rotate at the same rotational speed and in the same rotational direction, the traveling body 10 travels straight forward or straight rearward (on the assumption that its longitudinal direction matches the longitudinal direction of the machine body 20).

The traveling body 10 turns by creating a difference in rotational speed between the left traveling motor 13L and the right traveling motor 13R, stopping the rotation of only one of these motors, or making the rotational directions of these motors opposite to each other. The machine body 20 turns together with the traveling body 10 while maintaining the relative position with respect to the traveling body 10 unless the machine body 20 rotates relative to the traveling body 10 around a slewing shaft 18a, which will be described later.

The configuration of the machine body 20 will be described with reference to FIG. 1 to FIG. 6, FIG. 14 to FIG. 16, and the like. The machine body 20 includes a platform 21 having a horizontal plate-like shape, a lower side cover 22 vertically disposed at a peripheral edge portion of the platform 21, a hood side cover 23 disposed above the lower side cover 22, a hood top cover 24 disposed at an upper end portion of the hood side cover 23, a hood center cover 25 arranged along front end edges of the hood side cover 23 and the hood top cover 24, a partition plate 26 disposed between a lower end of the hood center cover 25 and an upper surface of the platform 21, and so forth.

The lower side cover 22 is disposed so as to be vertically arranged over substantially the entire area of the peripheral edge portion of the platform 21 and so as to have a substantially horizontal belt-like shape. The lower side cover 22 defines a front end surface, a rear end surface, a left end surface, and a right end surface in a lower-layer portion of the machine body 20. The lower side cover 22 includes a plurality of cover members arranged at forward, rearward, leftward, and rightward positions and connected to each other, with their upper edges being substantially flush and their lower edges being substantially flush.

The plurality of cover members of the lower side cover 22 include a front-surface cover member 22a, a front-left-surface cover member 22b, a rear-left-surface cover member 22c, a rear-surface cover member 22d, a rear-right-surface cover member 22e, and a front-right-surface cover member 22f.

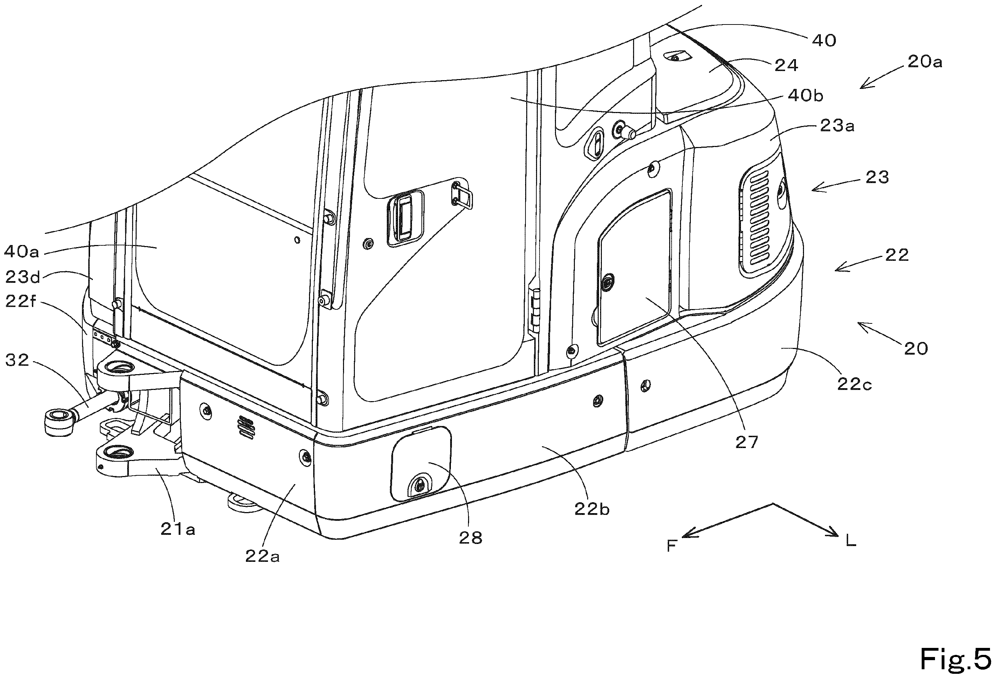

As illustrated in FIG. 5 and the like, at a front end portion of the machine body 20, the front-surface cover member 22a is formed so as to extend in the transverse direction along a front end edge of the platform 21. At a left end portion of the machine body 20, the front-left-surface cover member 22b is formed so as to extend in the longitudinal direction along a left end edge of a front half portion of the platform 21, and a front end of the front-left-surface cover member 22b is connected to a left end of the front-surface cover member 22a. The rear-left-surface cover member 22c is formed so as to extend in the longitudinal direction along a left end edge of a rear half portion of the platform 21, and a front end of the rear-left-surface cover member 22c is connected to a rear end of the front-left-surface cover member 22b.

As illustrated in FIG. 4 and the like, at a rear end portion of the machine body 20, a rear end portion of the rear-left-surface cover member 22c is curved at a portion along a left rear corner portion of the platform 21 and extends rightward along a rear end edge of the platform 21. In contrast, the rear-right-surface cover member 22e is vertically disposed along a right rear corner portion of the platform 21 so as to be substantially mirror-symmetrical with the rear-left-surface cover member 22c and extends leftward along the rear end edge of the platform 21.

The rear-surface cover member 22d is interposed between the rear-left-surface cover member 22c and the rear-right-surface cover member 22e along the rear end edge of the platform 21, and among these cover members 22c, 22d, and 22e, the adjacent cover members are joined to each other.

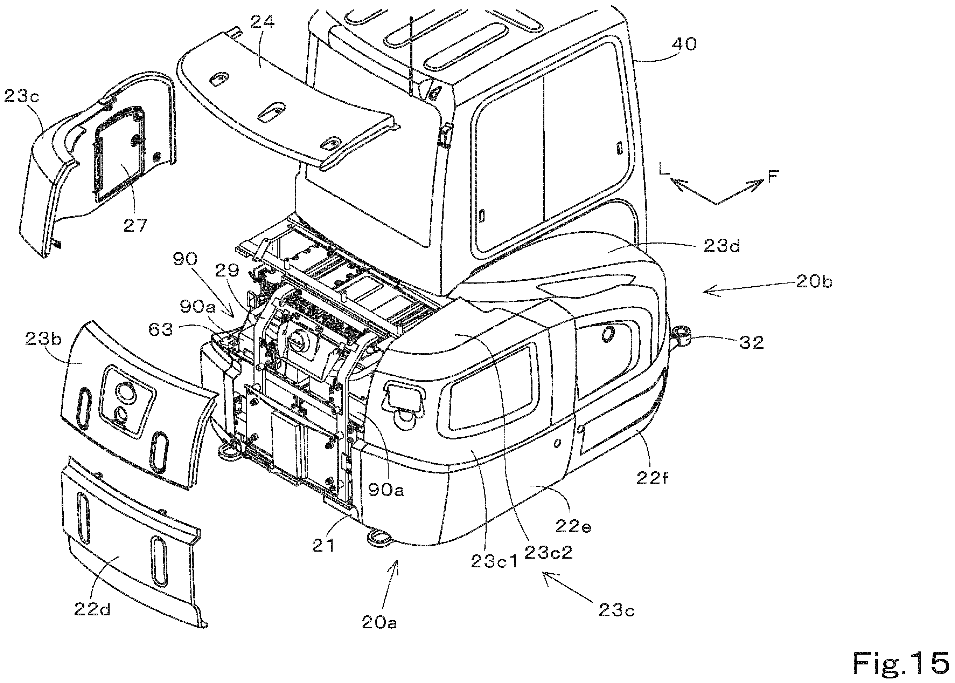

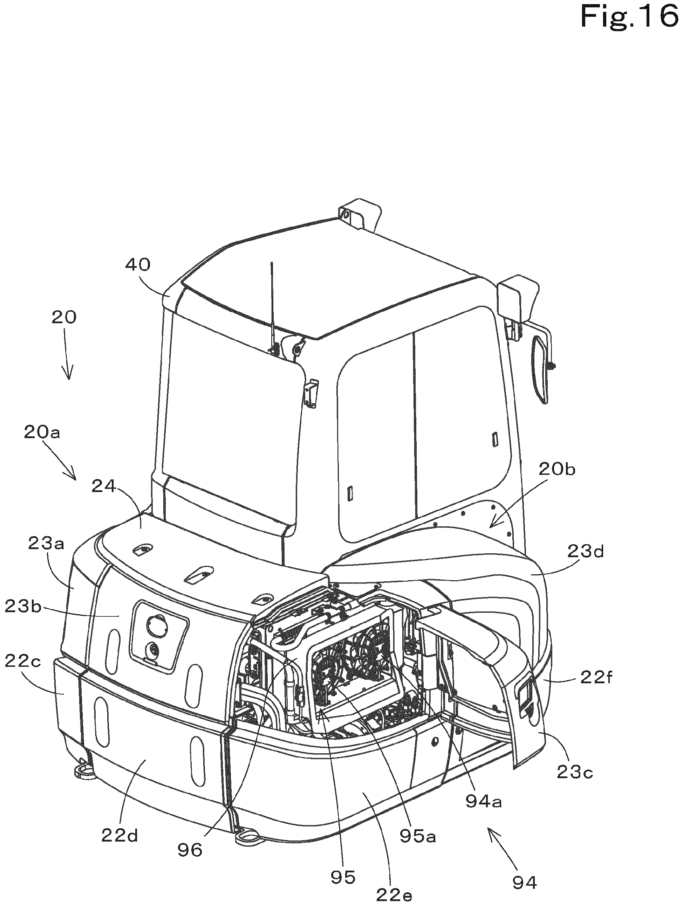

As illustrated in FIG. 15, FIG. 16, and the like, at a right end portion of the machine body 20, the rear-right-surface cover member 22e is curved at a portion along the right rear corner portion of the platform 21 and extends forward, and a front end of the rear-right-surface cover member 22e is positioned at a longitudinally intermediate portion of a right end edge of the platform 21. The front-right-surface cover member 22f is formed so as to extend in the longitudinal direction along a portion extending from a front end portion of the right end edge of the platform to the longitudinally intermediate portion and so as to be substantially mirror-symmetrical with the front-left-surface cover member 22b, which is located on the left of the machine body 20. A rear end portion of the front-right-surface cover member 22f is joined to a front end portion of the rear-right-surface cover member 22e.

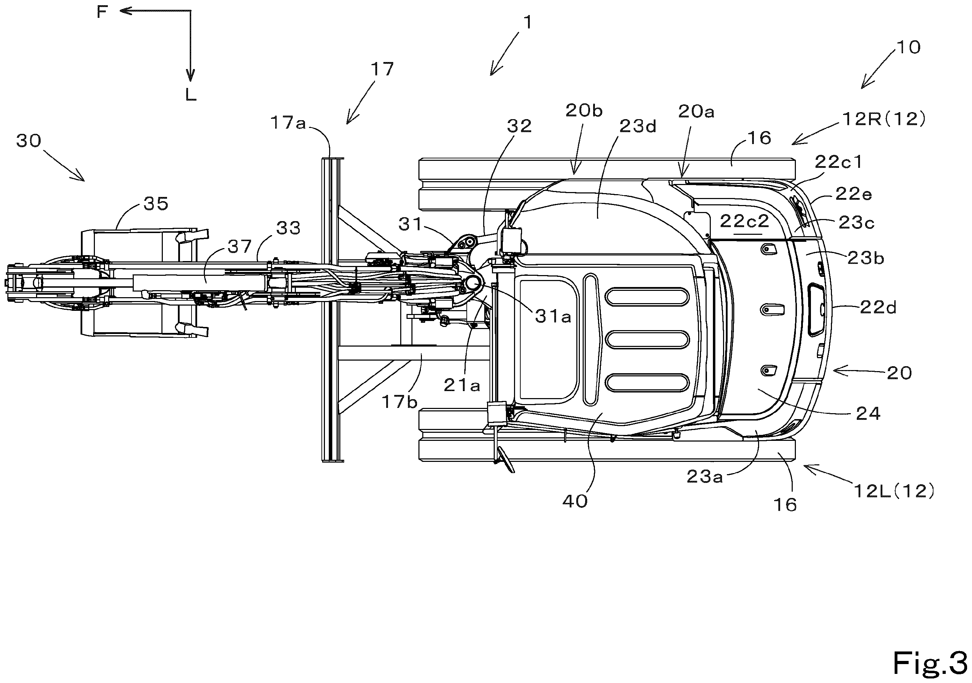

The hood side cover 23 is vertically disposed on an upper edge of the lower side cover 22, which is disposed so as to be vertically arranged at the peripheral edge portion of the platform 21, forming an upper-layer portion of the machine body 20. As will be described later, a cabin 40 is vertically disposed on the machine body 20, and as illustrated in FIG. 3 and the like, the hood side cover 23 constitutes a rear hood 20a at the rear of the cabin 40 and constitutes a side hood 20b at the right of the cabin 40.

The hood side cover 23 includes a plurality of cover members arranged at forward, rearward, leftward, and rightward positions and connected to each other, with their upper edges being substantially flush. The plurality of cover members of the hood side cover 23 include a left-surface cover member 23a, a rear-surface cover member 23b, a rear-right-surface cover member 23c, and a front-right-surface cover member 23d.

As illustrated in FIG. 1 to FIG. 6, FIG. 13, and the like, similar to the rear-left-surface cover member 22c of the lower side cover 22, the left-surface cover member 23a of the hood side cover 23 is curved when viewed in plan view. From a rear half portion a left end of the machine body 20 to a rear left end portion of the machine body 20, a lower end edge of the left-surface cover member 23a is joined to an upper end edge of the rear-left-surface cover member 22c, so that the left-surface cover member 23a is vertically disposed on the rear-left-surface cover member 22c.

As illustrated in FIG. 4 and the like, a right end of a rear portion of the left-surface cover member 23a is positioned so as to be flush with a right end of a rear portion of the rear-left-surface cover member 22c. As illustrated in FIG. 1, FIG. 2, and the like, a front end portion of the left-surface cover member 23a extends further forward than a front end of the rear-left-surface cover member 22c and is located on a rear portion of the front-left-surface cover member 22b.

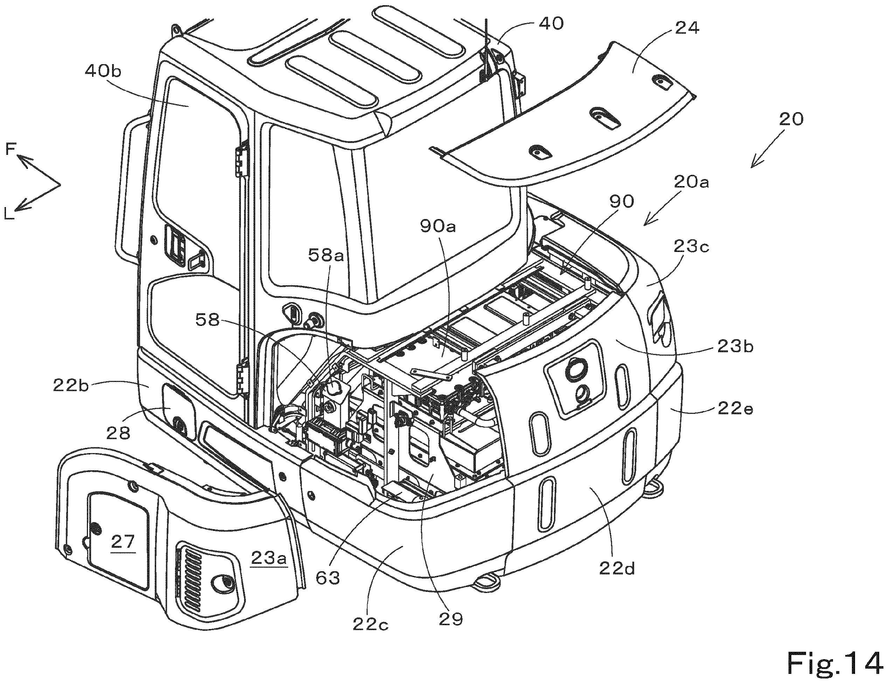

As illustrated in FIG. 4, FIG. 14, and the like, at the rear end portion of the machine body 20, a lower end edge of the rear-surface cover member 23b of the hood side cover 23 is joined to an upper end edge of the rear-surface cover member 22d of the lower side cover 22, so that the rear-surface cover member 23b is vertically disposed on the rear-surface cover member 22d. A left end of the rear-surface cover member 23b and a left end of the rear-surface cover member 22d are arranged to be flush with each other, and a right end of the rear-surface cover member 23b and a right end of the rear-surface cover member 22d are arranged to be flush with each other. A left end edge of the rear-surface cover member 23b is joined to a right end edge of the rear portion of the left-surface cover member 23a.

The hood top cover 24 is disposed so as to cover an opening that is defined by an upper end edge of the left-surface cover member 23a of the hood side cover 23 and an upper end edge of the rear-surface cover member 23b of the hood side cover 23, which is vertically disposed on the lower side cover 22 in the manner described above. A left end edge of the hood top cover 24 is joined to the upper end edge of the left-surface cover member 23a of the hood side cover 23, and a rear end edge of the hood top cover 24 is joined to the upper end edge of the rear-surface cover member 23b of the hood side cover 23, so that the hood top cover 24 is disposed so as to define a horizontal surface at an upper end of the rear hood 20a.

As illustrated in FIG. 16 and the like, a right end of the hood top cover 24 is positioned so as to be flush with a right end of the rear-surface cover member 22d and a right end of the rear-surface cover member 23b.

As illustrated in FIG. 3, FIG. 4, and FIG. 15, when viewed in plan view, the rear-right-surface cover member 23c of the hood side cover 23 includes a side plate portion 23c1 and an upper plate portion 23c2 that are integrally formed, the side plate portion 23c1 having a substantially vertical plate-like shape that is curved in a manner similar to the rear-right-surface cover member 22e of the lower side cover 22, the upper plate portion 23c2 extending substantially horizontally from an upper end of the side plate portion.

From a rear half portion of a right side end of the machine body 20 to a rear right end portion of the machine body 20, a lower end edge of the side plate portion 23c1 of the rear-right-surface cover member 23c is joined to an upper end edge of the rear-right-surface cover member 22e, so that the rear-right-surface cover member 23c is vertically disposed on the rear-right-surface cover member 22e.

As illustrated in FIG. 15 and the like, a front end of the rear-right-surface cover member 23c is positioned so as to be flush with a front end of the rear-right-surface cover member 22e. As illustrated in FIG. 3, FIG. 4, FIG. 15, and the like, a left end of the side plate portion 23c1 at a rear end of the rear-right-surface cover member 23c is positioned so as to be flush with a left end of a rear portion of the rear-right-surface cover member 22e. A left end edge of the side plate portion 23c1 of the rear-right-surface cover member 23c is joined to a right end edge of the rear-surface cover member 23b, which is vertically disposed on the rear-surface cover member 22d.

A left end edge of the upper plate portion 23c2 of the rear-right-surface cover member 23c is joined to a right end edge of the hood top cover 24. In this manner, an upper surface of the hood top cover 24 and an upper surface of the upper plate portion 23c2 of the rear-right-surface cover member 23c are arranged side by side so as to be flush with each other, thereby forming an upper end surface of the rear hood 20a.

As a result, at a rear portion of the machine body 20, the left-surface cover member 23a, the rear-surface cover member 23b, the rear-right-surface cover member 23c of the hood side cover 23 and the hood top cover 24 form the rear hood 20a at the rear of the cabin 40.

As illustrated in FIG. 15, FIG. 16 and the like, a lower end edge of the front-right-surface cover member 23d of the hood side cover 23 is joined to an upper end edge of the front-right-surface cover member 23f of the lower side cover 22, and a rear end edge of the front-right-surface cover member 23d is joined to a front end edge of the rear-right-surface cover member 23c. In this manner, at the right end portion of the machine body 20, the front-right-surface cover member 23d is vertically disposed on the front-right-surface cover member 23f.

As can be seen from FIG. 3, FIG. 15, FIG. 16, and the like, the upper end portion of the hood side cover 23 and a front end portion of the hood side cover 23 protrude rightward, and a right end of the hood side cover 23 is in contact with a right side surface of the cabin 40, which is mounted on the machine body 20 as will be described later. In the upper end portion of the hood side cover 23, a rear end edge of a portion that protrudes rightward is joined to a front end edge of the upper plate portion 23c2 of the rear-right-surface cover member 23c. The hood side cover 23 having such a shape constitutes the side hood 20b located on the right of the cabin 40.

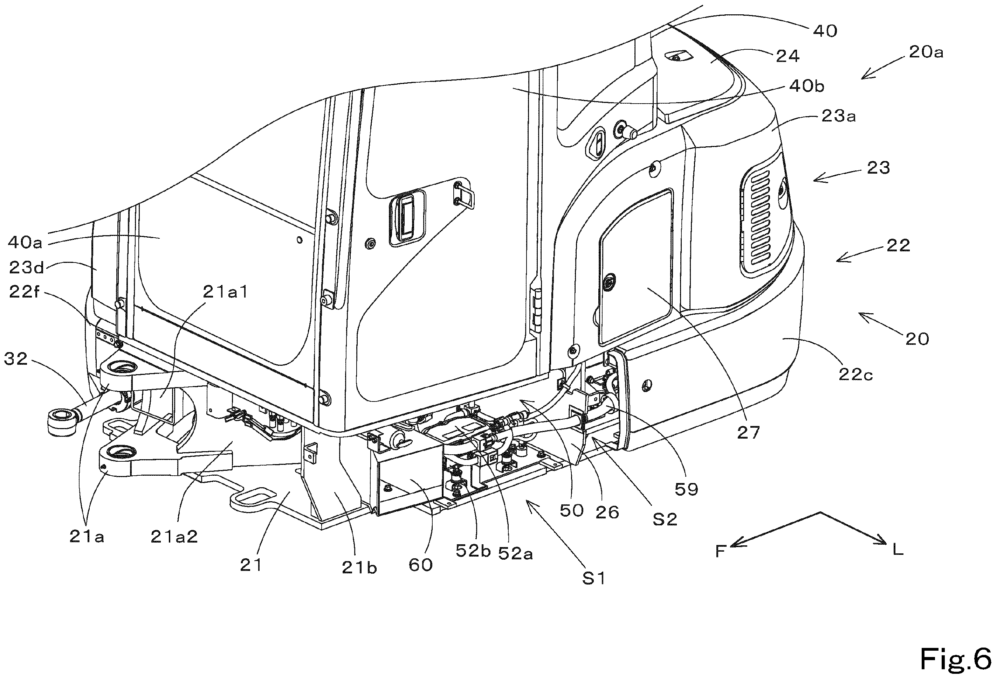

As illustrated in FIG. 6 to FIG. 8, FIG. 17, and the like, the partition plate 26 having a vertical plate-like shape is vertically disposed at a longitudinally intermediate portion of the upper surface of the platform 21 so as to extend in the transverse direction. An upper end of the partition plate 26 is positioned at substantially the same height as an upper end of the lower side cover 22. At the left portion of the machine body 20, a left end of the partition plate 26 is connected to a longitudinally intermediate portion of the lower side cover 22, specifically, a portion that is located slightly forward of the rear end of the front-left-surface cover member 22b.

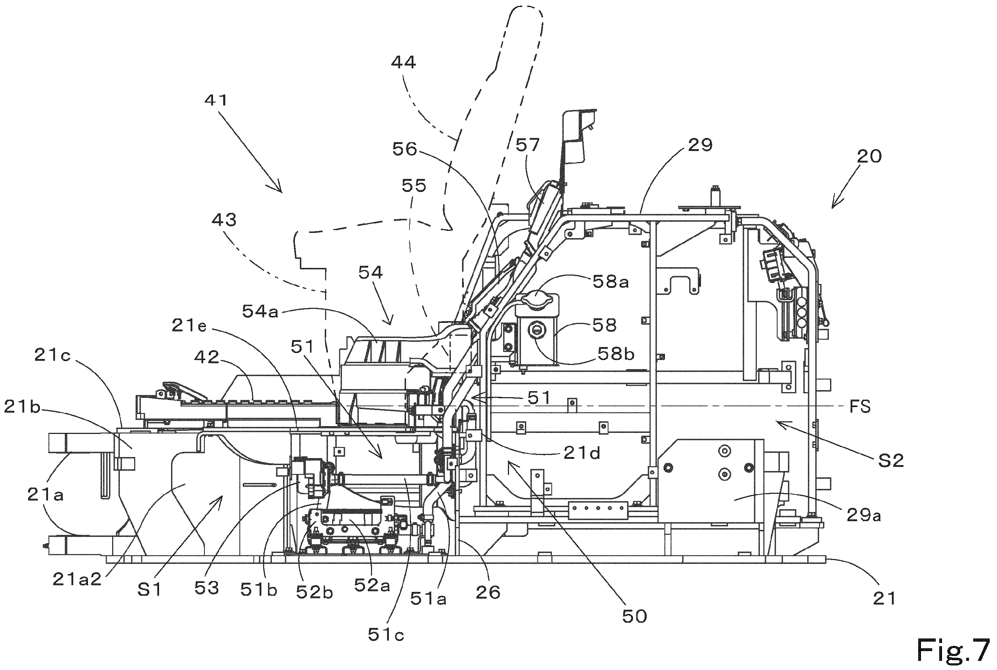

As illustrated in FIG. 1, FIG. 2, FIG. 5, and the like, at a left end portion of the machine body 20, the front end portion of the left-surface cover member 23a of the hood side cover 23 is formed so as to be curved and raised to an upper end portion thereof. As can be seen from FIG. 7 to FIG. 9 and the like, the lower end of the hood center cover 25 is joined to the upper end of the partition plate 26, and an upper end of the hood center cover 25 is joined to a front end of the hood top cover 24. When viewed from the side, the hood center cover 25 is formed so as to extend obliquely rearward and upward along the front end portion of the hood side cover 23, which is located at the left portion of the machine body 20.

As can be seen from FIG. 6 to FIG. 8 and the like, in the machine body 20, an internal space is formed above the platform 21 and is defined by the lower side cover 22, the hood side cover 23, the hood top cover 24, the hood center cover 25, and a side surface of the cabin.

In the internal space, a front half space that is located forward of the partition plate 26 is defined as an underfloor compartment S1, and a rear half space that is located rearward of the partition plate 26 and the hood center cover 25 is defined as a rear hood compartment S2 that includes the rear hood 20a. On the right of the cabin 40, a side hood compartment S3 is formed in the side hood 20b, which extends further forward than a right front portion of the rear hood 20a.

The height of the underfloor compartment S 1 that is located forward of the partition plate 26, the height of the rear hood compartment S2 that is located rearward of the partition plate 26, and the height of the side hood compartment S3 of the cabin 40 that is located forward of the partition plate 26 are all defined by the upper surface of the platform 21 and are at the same height.

In contrast, an upper end of the rear hood compartment S2 and an upper end of the side hood compartment S3 that are defined by an upper end of the hood side cover 23 are each higher than an upper end of the underfloor compartment S 1 that is defined by the upper end of the lower side cover 22 by an amount equal to a vertical width of the hood side cover 23.

As illustrated in FIG. 6 and FIG. 14 to FIG. 16, the cover members 22a to 22f, which are included in the lower side cover 22, the cover members 23a to 23d, which are included in the hood side cover 23, and the hood top cover 24 are individually removable. By removing these cover members, the inside of the underfloor compartment S1, the inside of the rear hood compartment S2, and the inside of the side hood compartment S3 are opened, allowing access to various equipment provided inside these compartments. Alternatively, similar to the rear-right-surface cover member 23c illustrated in FIG. 16, each cover member may have a structure that allows it to open and close like a hinged door.

Each of the lower side cover 22 and the hood side cover 23 included in a peripheral edge portion and the like of the machine body 20 may not necessarily include the plurality of cover members connected to each other. For example, some or all of the plurality of cover members may be replaced with a single cover member having an integrally formed configuration. Each cover member may be undetachably connected to the platform 21, the adjacent cover member, or the like.

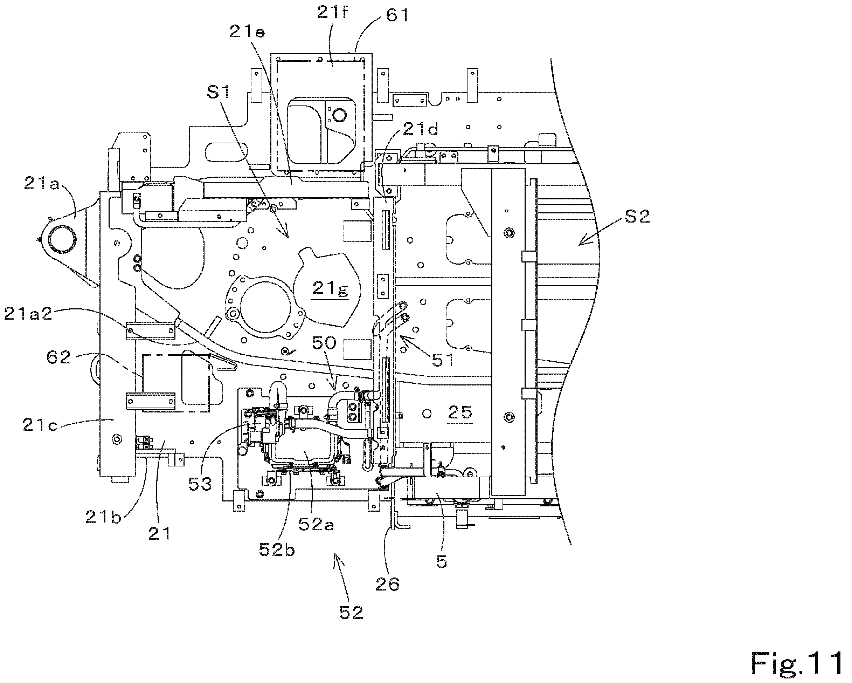

As illustrated in FIG. 11, the platform 21 has a hole 21g extending through at a portion thereof, the portion being included in a bottom plate of the underfloor compartment S 1. A slewing motor (not illustrated) is disposed on the upper surface of the platform 21 in the vicinity of the hole 21g. The slewing shaft that is operatively connected to an output shaft of the slewing motor passes through the hole 21g and extends downward beneath the platform 21 and is rotatably supported by the traveling frame 11 of the traveling body 10.

The machine body 20 turns in the horizontal direction with respect to the traveling body 10 as a result of being driven by the slewing motor. The slewing motor may be, for example, an electric motor or a hydraulic motor. In the case of an electric motor, the electric motor may be driven by receiving electric power from a battery, which will be described later. In contrast, in the case of a hydraulic motor, the hydraulic motor may be driven by a fluid delivered from at least one hydraulic pump driven by the electric motor 92 serving as the prime mover (described later).

As illustrated in FIG. 1 and FIG. 5, and the like, the lower side cover 22 has an opening formed at a right front portion of the machine body 20. As this opening, a space is formed between a right end of the front-surface cover member 22a and a front end of the front-right-surface cover member 22f. The platform 21 is formed with a bracket base 20a that projects further forward than the front-surface cover member 22a through this space.

As illustrated in FIG. 3 and the like, a swing bracket 31 is pivotally supported on the bracket base portion 21a via a pivot 31a that extends in the vertical direction. A swing cylinder 32 that serves as a hydraulic actuator is provided on an upper surface of a right portion of the platform 21 so as to extend substantially in the longitudinal direction from a right portion of the rear hood compartment S2 to the underfloor compartment S1.

A piston rod of the swing cylinder 32 projects forward through the above-mentioned space between the front-surface cover member 22a and the front-right-surface cover member 22f and is pivotally connected to the swing bracket 31. As a result of expansion and contraction of the swing bracket 31, the swing bracket 31 can rotate in the transverse direction relative to the machine body 20 around a vertical axis of the pivot 31a.

As illustrated in FIG. 1 to FIG. 3 and the like, in the present embodiment, the working device 30 is a backhoe-type excavation working device that includes a boom 33, an arm 34, and a bucket 35 that is an example of a work attachment. The working device 30 will be described below assuming a state in which the longitudinal direction of the working device 30 matches the longitudinal direction of the machine body 20 (a state in which the swing bracket 31 is not rotating left or right relative to the machine body 20).

A base end portion of the boom 33 is pivotally supported by the swing bracket 31. A base end portion of the arm 34 is pivotally supported by a distal end portion of the boom 33. The bucket 35 is pivotally supported by a distal end portion of the arm 34. As a result, the boom 33, the arm 34, and the bucket 35 are vertically or longitudinally rotatable relative to the swing bracket 31, the boom 33, and the arm 34, respectively.

The working device 30 includes a boom cylinder 36, an arm cylinder 37, and a bucket cylinder 38 each of which serves as a hydraulic actuator. The boom 33 is bent at an intermediate portion thereof in the longitudinal (or vertical) direction, and the boom cylinder 36 is interposed between a front portion of the swing bracket 31 and a bent portion of the boom 33. The arm cylinder 37 is interposed between the bent portion of the boom 33 and the base end portion of the arm 34, and is interposed between the base end portion of the arm 34 and the bucket 35.

As a result of expansion and contraction of a piston rod of the boom cylinder 36, The boom 33 rotates relative to the swing bracket 31. As a result of expansion and contraction of a piston rod of the arm cylinder 37, the arm 34 rotates relative to the boom 33. As a result of expansion and contraction of a piston rod of the bucket cylinder 38, the bucket 35 rotates relative to the arm 34.

Instead of the bucket 35 or in addition to the bucket 35, another hydraulic attachment can be attached to the distal end portion of the arm 34. Examples of the other hydraulic attachment include a hydraulic breaker, a hydraulic crusher, an angle broom, an earth auger, a pallet fork, a sweeper, a mower, a snow blower, and the like.

As illustrated in FIG. 1 to FIG. 3, assuming a state in which the longitudinal direction of the traveling body 10 matches the longitudinal direction of the machine body 20, a dozer 17 that is a working device different from the working device 30 is disposed so as to be located forward of the traveling body 10. The dozer 17 includes a blade 17a, a dozer arm 17b, and a dozer cylinder 18 that serves as a hydraulic actuator.

The blade 17a is disposed so as to be located forward of the left and right traveling devices 12L and 12R. The dozer arm 17b is disposed between the left traveling device 12L and the right traveling device 12R. A front end of the dozer arm 17b is fixed to the blade 17a, and a rear end of the dozer arm 17b is supported by the traveling frame 11 so as to be vertically pivotable.

The dozer cylinder 18 is interposed between a longitudinally intermediate portion of the dozer arm 17b and the traveling frame 11. As a result of expansion and contraction of a piston rod of the dozer cylinder 18, the dozer arm 17b and the blade 17a vertically rotate relative to the traveling frame 11.

A layout of the equipment arranged in the internal space of the machine body 20 will be described with reference to FIG. 6 to FIG. 8, FIG. 11, and FIG. 13 to FIG. 17.

As illustrated in FIG. 7, FIG. 14, FIG. 15, FIG. 17 and the like, in the rear hood compartment S2, a support frame (an arch) 29 is vertically disposed on the platform 21. The support frame 29 also serves as a frame that supports the rear hood 20a from the inside.

The support frame 29 supports a battery unit 90. The battery unit 90 includes a plurality of batteries combined together, and in the present embodiment, the battery unit 90 includes a pair of batteries 90a and 90a that are arranged side by side and connected to each other by a frame 90b.

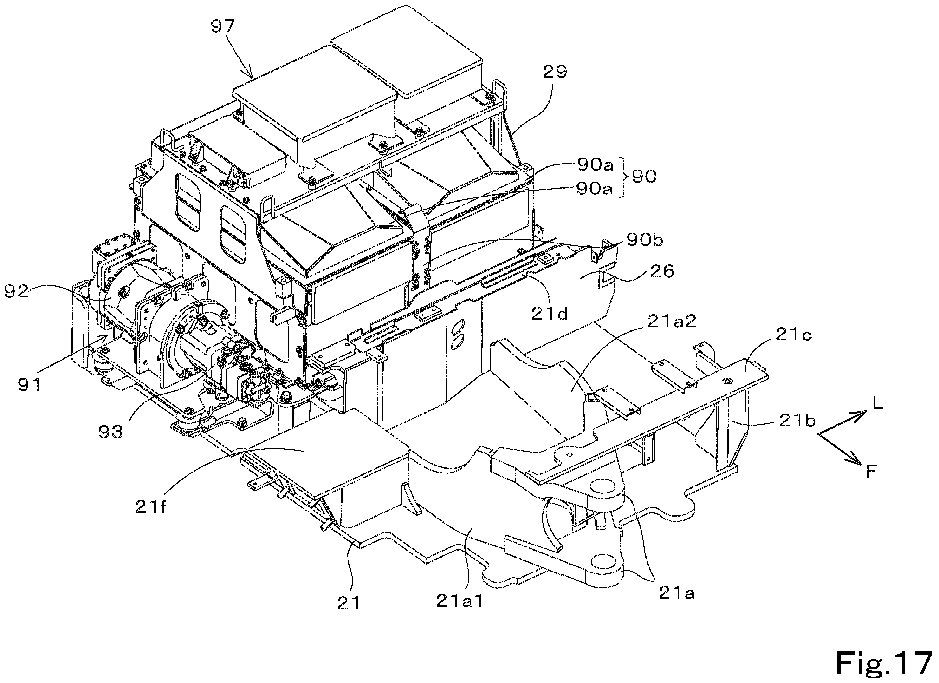

As illustrated in FIG. 17, electrical components 97 including an inverter, a converter, and the like are mounted on an upper surface of the support frame 29 located above the battery unit 90. As illustrated in FIG. 7, a sub-battery support frame 29a is provided on the rear left of the support frame 29 so as to face the rear-left-surface cover member 22c of the lower side cover 22. As illustrated in FIG. 14 and FIG. 15, a sub-battery 63 is supported by the sub-battery support frame 29a.

As illustrated in FIG. 17, in a portion of the rear hood compartment S2, the portion being surrounded by the rear-right-surface cover member 22e of the lower side cover 22, a motor-and-pump assembly 91 is mounted on the platform 21 so as to be located on the right of the battery unit 90 (the support frame 29).

The motor-and-pump assembly 91 includes a frame 91a, the electric motor 92, and a hydraulic pump 93. The electric motor 92 and the hydraulic pump 93 are supported by the frame 91a so as to be arranged coaxially with each other.

The electric motor 92 is provided as a prime mover of the working machine 1 and is driven by electric power supplied from the battery or batteries 90a of the battery unit 90. The hydraulic pump 93 is an axial piston pump, and an output shaft of the electric motor 92 extends and is fitted into the hydraulic pump 93 so as to serve as a pump shaft, which is a rotary shaft of the hydraulic pump 93.

The motor-and-pump assembly 91 has a shaft core extending in the longitudinal direction and is mounted on the upper surface of the platform 21 so as to be located on the right of the battery unit 90 in a state where the electric motor 92 and the hydraulic pump 93 are arranged in parallel in the longitudinal direction.

As illustrated in FIG. 16, on the right of the battery unit 90 (the support frame 29), a radiator 94 and an oil cooler (a hydraulic fluid cooler) 95 are arranged in parallel in the longitudinal direction above the motor-and-pump assembly 91.

The radiator 94 is provided to dissipate heat from a cooling water that is used for cooling the battery unit 90, the motor-and-pump assembly 91, and the like. The radiator 94 includes an electric radiator fan 94a and discharges air that has been heated by heat dissipation from the cooling water.

The oil cooler 95 cools a hydraulic fluid that is a fluid delivered from the hydraulic pump 93 of the motor-and-pump assembly 91 and that has been heated to a high temperature as a result of being used for operation of hydraulic equipment, which will be described later. The oil cooler 95 includes an electric oil cooler fan 95a discharges air that has been heated by heat dissipation from the hydraulic fluid.

The radiator 94 and the oil cooler 95 are surrounded by a shroud 96, and the shroud 96 extends rightward as a duct for sending out air discharged from the radiator fan 94a and the oil cooler fan 95a. An air discharge port that is formed in the rear-right-surface cover member 23c of the hood side cover 23 faces a right-end opening of the shroud 96, and the discharged air is released to the outside air through this air discharge port.

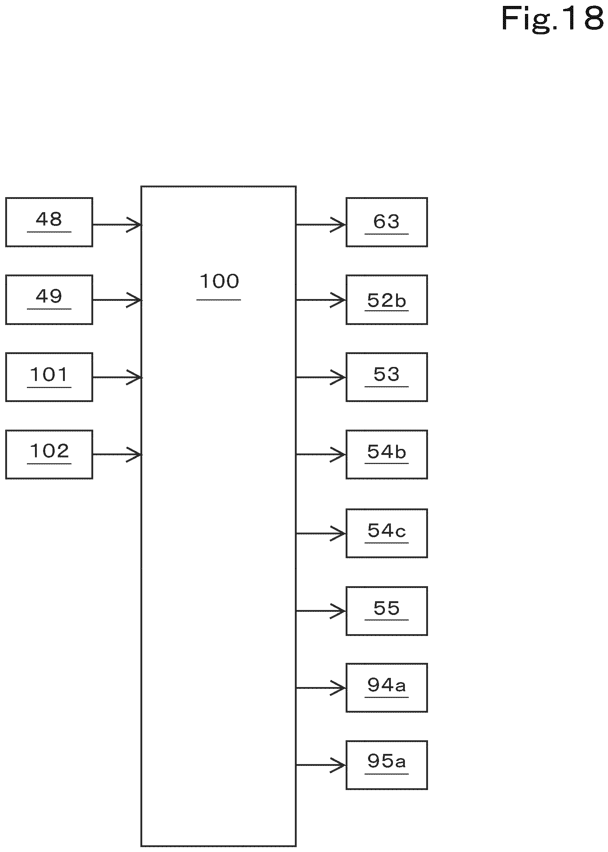

The electric radiator fan 94a and the electric oil cooler fan 95a can be switched on and off freely by an operator or by automatic control. Referring to FIG. 18, for example, the machine body 20 of the working machine 1 may be provided with a controller 100 disposed at an appropriate position, and as input devices to the controller 100, a radiator fan switch 101 and an oil cooler fan switch 102 each of which can be freely operated by the operator, may be provided in an operation room 41 (described later) or the like. The radiator fan 94a and the oil cooler fan 95a may be switched on and off through the operations of these switches.

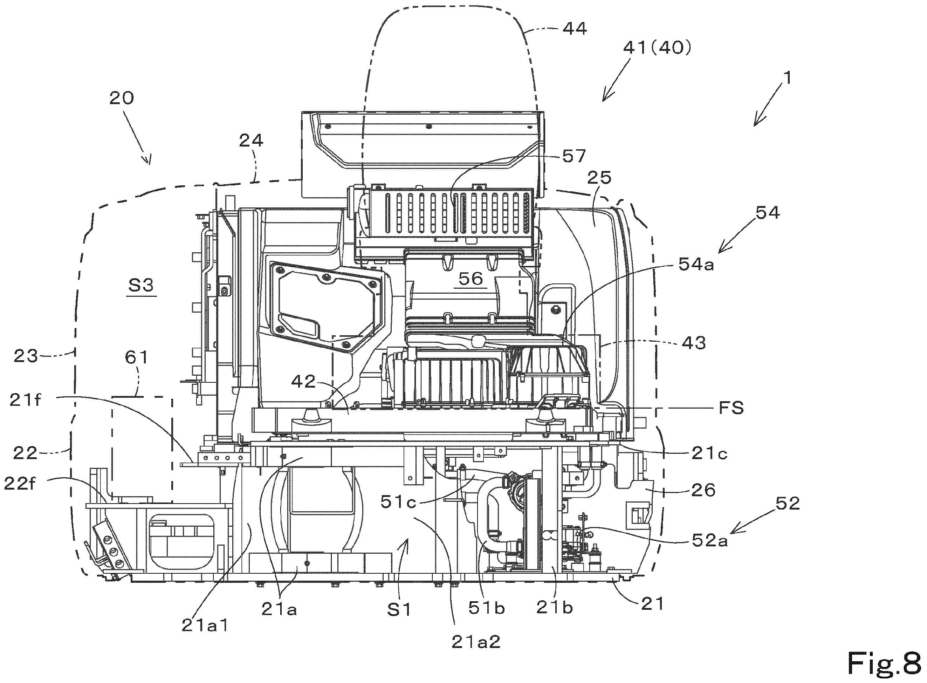

As illustrated in FIG. 8, FIG. 11, FIG. 17, and the like, in the side hood compartment S3 that is covered with the front-right-surface cover member 23d as the side hood 20b, a tank base 21f is disposed on the platform 21, and a hydraulic fluid tank 61 is mounted on the tank base 21f.

As illustrated in FIG. 11, in the underfloor compartment S1, a control valve unit 62 is disposed at a left front portion of the platform 21. The control valve unit 62 includes individual control valves combined together., and each of these control valves controls the flow of the hydraulic fluid to a corresponding one of the hydraulic actuators such as the boom cylinder 36, the arm cylinder 37, and the bucket cylinder 38, which are included in the working device 30, and the dozer cylinder 18 of the dozer 17.

The electric motor 92 of the motor-and-pump assembly 91 in the rear hood compartment S2 illustrated in FIG. 17 is driven by the electric power supplied from the batteries 90a of the battery unit 90. The hydraulic pump 93 is driven by the output of the electric motor 92 so as to suck in the hydraulic fluid from the hydraulic fluid tank 61 and so as to deliver the hydraulic fluid.

The hydraulic fluid that is delivered from the hydraulic pump 93 is supplied to the hydraulic equipment, such as the hydraulic actuators of the working device 30 and the like, via the control valves of the control valve unit 62, which is illustrated in FIG. 11, so as to cause the hydraulic equipment to operate. The hydraulic fluid that has been heated to a high temperature as a result of being used for the operation of the hydraulic equipment is cooled by the above-mentioned oil cooler 95 and returns to the hydraulic fluid tank 61 or is sucked in by the hydraulic pump 93.

As illustrated in FIG. 7, FIG. 8, FIG. 11, and the like, a pair of right and left vertical ribs 21a1 and 21a2 are vertically arranged on the platform 21 so as to extend through the underfloor compartment S1 in the longitudinal direction. The through hole 21g through which the slewing shaft passes is positioned between the right vertical rib 21a1 and the left vertical rib 21a2.

The right vertical rib 21a1 extends substantially linearly in the longitudinal direction and defines a right end surface of the underfloor compartment S 1. A front portion of the left vertical rib 21a2 is bent rightward in such a manner as to come close to the right vertical rib 21al. A front end portion of the right vertical rib 21a1 and a front end portion of the left vertical rib 21a2 are joined to each other so as to form a bracket base 21a that has a tapered shape when viewed in plan view.

In the underfloor compartment S1, a columnar frame 21b is vertically disposed on the platform 21 so as to be located on the left of the left vertical rib 21a2. A front support plate 21c that has a flat plate-like shape and that extends in the transverse direction is disposed across an upper end of the columnar frame 21b and an upper end of the right vertical rib 21a1.

A rear support plate 21d that has a flat plate-like shape and that extends in the transverse direction is provided and fixed to the upper end of the partition plate 26 so as to face the front support plate 21c. A right support plate 21e that has a flat plate-like shape and that extends in the longitudinal direction is formed at the upper end of the right vertical rib 21a1.

As illustrated in FIG. 7 and the like, the front support plate 21c, the rear support plate 21d, and the right support plate 21e are arranged so as to be flush with each other at the same height and define a front end edge, a rear end edge, and a right end edge of an upper end surface of the underfloor compartment S1. At the same time, these support plates 21c, 21d and 21e define a front end edge, a rear end edge and a right end edge of a bottom end surface of the cabin 40.

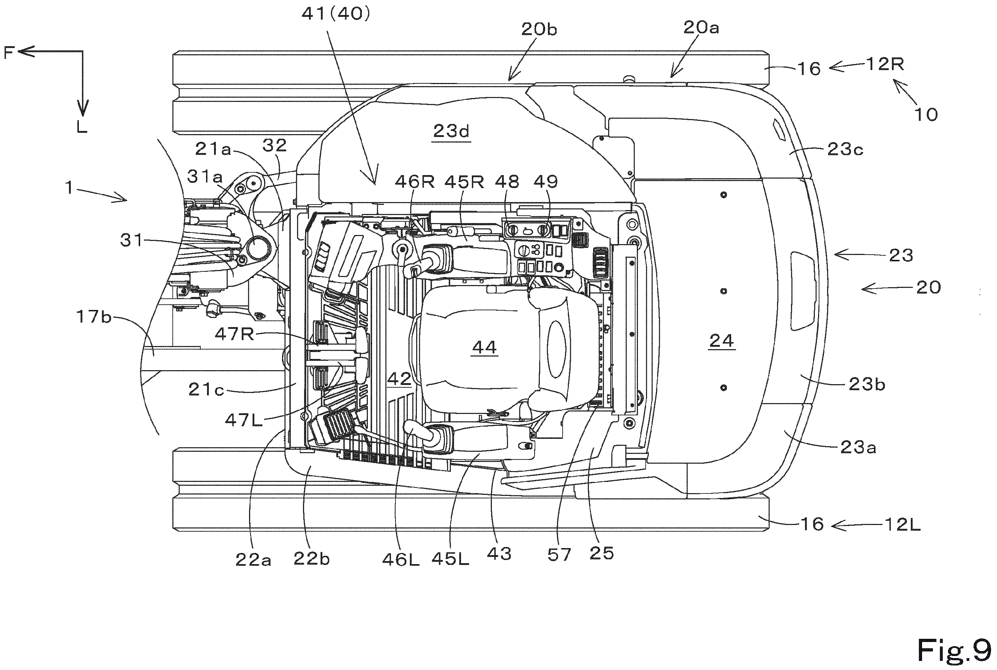

As illustrated in FIG. 1 and the like, the cabin 40 serving as an operation room structure is mounted on a front half portion of the machine body 20. The cabin 40 includes the operation room 41 formed therein, such as that illustrated in FIG. 9 and the like. The operator in the operation room 41 can visually recognize the outside of the cabin 40 through a windshield 40a at a front end surface of the cabin 40, as well as transparent windows that are included in left and right end surfaces of the cabin 40 and in a rear end surface of the cabin 40.

As illustrated in FIG. 7, FIG. 9, and the like, a lower end portion of a front half portion of the cabin 40 includes a floor plate member 42 that serves as a floor surface body. A front end portion of the floor plate member 42 is placed on the front support plate 21c, and a left end portion of the floor plate member 42 is placed on an upper end surface of the front-left-surface cover member 22b located at a left portion of the lower side cover 22. A right end portion of the floor plate member 42 is placed on the right support plate 21e, and the floor plate member 42 is fixed to these support plates 21c, 21d, and 21e by a fastener or the like.

A left end portion of the floor plate member 42 extends in the longitudinal and horizontal directions along an upper end of the front-left-surface cover member 22b. A left surface portion of the front half portion of the cabin 40 that extends upward from the upper end of the front-left-surface cover member 22b has an opening that serves as a doorway, and a door 40b is provided so as to cover this opening.

As illustrated in FIG. 7 and FIG. 8, a lower end of a front half portion of the operation room 41 located inside the cabin 40 is defined by a floor surface FS that is an upper surface of the floor plate member 42. As illustrated in FIG. 7, FIG. 8, FIG. 10, and the like, a lower portion of a rear half portion of the operation room 41 includes a seat base 43. A lower portion of a front end surface of the seat base 43 is in contact with a rear end surface of the floor plate member 42. A right end of the seat base 43 is placed on the right support plate 21e, and a rear end of the seat base 43 is placed on the rear support plate 21d.

As illustrated in FIG. 7 to FIG. 10 and the like, the operator's seat 44 is mounted on the seat base 43. The floor surface FS extends in the transverse direction forward of a front lower end of the seat base 43. The operator who sits in the operator's seat 44 can place their feet with the soles in contact with the upper surface of the floor plate member 42, which serve as the floor surface FS.

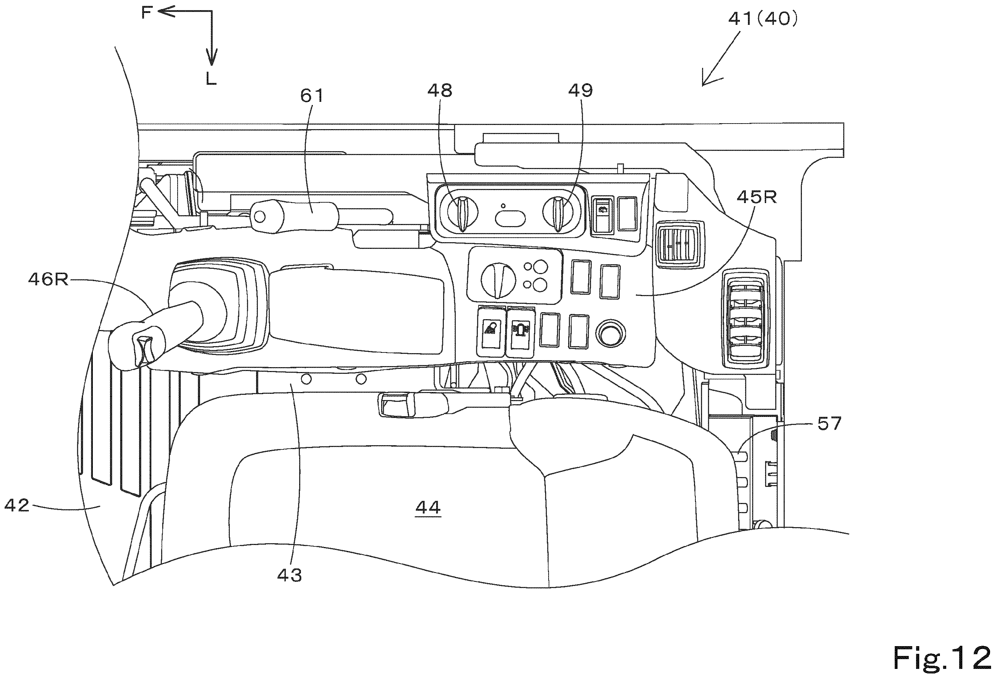

As illustrated in FIG. 9, FIG. 12, and the like, various operation actuators that can be operated by the operator seated in the operator's seat 44 are arranged in the operation room 41. First, consoles 45L and 45R are arranged one each on the left and right of the operator's seat 44, and a pair of left and right work operation levers 46L and 46R are provided at the consoles 45L and 45R, respectively. Left and right travel operation levers 47L and 47R are arranged so as to extend upward from a front portion of the floor plate member 42, the front portion being located at the center in the transverse direction.

The operator seated in the operator's seat 44 grips a head of the left control lever 46L with his/her left hand, and grips a head of the right control lever 46R with his/her right hand. The operator can control the component (or components) of the working device 30 by operating the work operation levers 46L and 46R. The operator can also control switching of forward and reverse movement of the traveling body 10, the traveling speed of the traveling body 10, and starting/stopping of the traveling body 10 by operating the left and right travel operation levers 47L and 47R.

A temperature adjustment dial 48 and a blower dial 49, which are temperature adjustment operation members, are arranged on the left or right (the right in the present embodiment) of the operator's seat 44. The temperature adjustment dial 48 and the blower dial 49 are arranged in the longitudinal direction. In the present embodiment, although the temperature adjustment dial 48 is disposed so as to be located forward of the blower dial 49, it may be disposed so as to be located rearward of the blower dial 49.

The turning angle of the temperature adjustment dial 48 from an OFF position corresponds to an operating position, and a set temperature level is set in accordance with the turning angle. A signal that corresponds to the set temperature level is input to the controller 100 (see FIG. 18), which will be described later. The temperature of air blown into the operation room 41 from an air outlet 57 (described later) or the like that is disposed so as to be located rearward of the operator's seat 44 is adjusted in accordance with the magnitude of the set temperature level. Similarly, the amount of air blown into the operation room 41 from the air outlet 57 or the like is adjusted in accordance with the turning angle of the blower dial 49 from an OFF position (i.e., an operating position).

The hood center cover 25 that is inclined rearward and upward is disposed so as to be located rearward of the seat base 43. The operation room 41 is located forward of the hood center cover 25, and a front end portion of the rear hood compartment S2 is formed immediately behind the hood center cover 25 along the hood center cover 25 so as to extend obliquely rearward and upward.

In a space covered by the seat base 43 and a front surface of the hood center cover 25, an air heating unit 54 that is a component of a heater 50 is disposed on the platform 21. The air heating unit 54 includes a unit case 54a. Referring to FIG. 18, a heat exchanger 54b, a blower 54c, a flow regulating valve 55, and the like are accommodated in the unit case 54a.

A duct 56 extends obliquely rearward and upward along the hood center cover 25 from a portion of the unit case 54a in which the blower is accommodated, and the air outlet 57 is formed at a rear upper end portion of the duct 56. Air that has been heated by hot water introduced into the unit case 54a is blown by the blower in the unit case 54a into the operation room 41 through the duct 56 and the air outlet 57.

The air heating unit 54 is combined with, for example, a gas-liquid separation tank 58 that is disposed in a front portion of the rear hood compartment S2 as illustrated in FIG. 7, a water heating unit 52 and a hot water pump 53 (a hot water circulator) that are arranged in the underfloor compartment S1 in the machine body 20, a hot-water circulation passage 51 (a hot water circulator) that includes pipes and the like, so that the heater 50 for heating the air in the operation room 41 is formed.

The configuration of the heater 50 will be described with reference to FIG. 6 to FIG. 11 and the like. In the following description, the term "pipes" includes pipes such as a hose and a metal pipe and piping-related members such as a joint for connecting pipes.

A tool box 60 that has an open left end such as that illustrated in FIG. 6 is provided on the left of the control valve unit 62 that is arranged as illustrated in FIG. 11 in a front portion of the underfloor compartment S1 below the floor plate member 42. The front-left-surface cover member 22b that is included in the lower side cover 22 and the defines a left end of the underfloor compartment S 1 has an opening that is formed so as to face the open left end of the tool box 60, and a lid plate 28 that is openable and closable is provided so as to cover this opening.

As illustrated in FIG. 6 to FIG. 8 and the like, in the underfloor compartment S1, the water heating unit 52 that serves as a heat generator of the heater 50 is disposed to be located rearward of the tool box 60. The water heating unit 52 includes a unit case 52a and a heat generating element 52b (a heat generator) that is illustrated in FIG. 18 and accommodated in the unit case 52a. The heat generating element 52b generates heat by using electric power supplied from the sub-battery 63 that is disposed in the rear hood compartment S2. A positive temperature coefficient (PTC) heater or the like is applicable to the heat generating element 52b.

As illustrated in FIG. 7, a water supply passage 51a that a portion of the hot-water circulation passage 51, which includes the pipes, is further drawn into the unit case 52a of the water heating unit 52. Water circulating in the hot-water circulation passage 51 is heated by receiving heat, which is generated by the heat generating element 52b, when passing through the inside of the unit case 52a so as to become hot water.

The amount of heat generated by the heat generating element 52b can be adjusted by, for example, adjusting the amount of current. The temperature of the hot water flowing through the hot-water circulation passage 51 can be adjusted by adjusting the amount of heat generated by the heat generating element 52b.

In the underfloor compartment S1, the hot water pump 53 is disposed in the vicinity of the water heating unit 52 so as to be located rearward of the tool box 60. The hot water pump 53 is an electric pump and receives electric power from the sub-battery 63 together with the heat generating element 52b of the water heating unit 52.

The sub-battery 63 can be recharged by being replenished with electric power supplied from the batteries 90a of the battery unit 90, which supplies the electric power to the electric motor 92 serving as a prime mover. In other words, the heat generating element 52b of the water heating unit 52 and the hot water pump 53 receive the electric power supplied from the batteries 90a via the sub-battery 63.

Directly supplying the electric power to these heating electrical equipment from the batteries 90a without passing through the sub-battery 63 may also be considered. However, by providing the sub-battery 63 having a reasonable capacity for driving the electrical equipment of the heater 50 separately from the batteries 90a, which is used for driving the working device 30 and the like, the electric power can be stably supplied to the electrical equipment of the heater 50 regardless of the operational state of the working device 30.

In contrast, the sub-battery 63 can be charged with the electric power from the batteries 90a when the batteries 90a have surplus electric power, so that it is possible to prevent a situation where the electric power for the heater 50 is insufficient.

As illustrated in FIG. 7 and FIG. 8, a hot-water feeder 51b that is a portion of the hot-water circulation passage 51 extends from the unit case 52a of the water heating unit 52 and is connected to a suction port of the hot water pump 53. Accordingly, the hot water heated in the water heating unit 52 is supplied to the hot water pump 53. A hot-water delivery passage 51c that is included in the hot-water circulation passage 51 and through which the water delivered from the hot water pump 53 is sent out extends rearward from the hot water pump 53.

The pipes included in the hot-water circulation passage 51 are routed from the underfloor compartment S1 to the rear hood compartment S2 through the partition plate 26 or the hood center cover 25. As illustrated in FIG. 7 and the like, the gas-liquid separation tank 58 connected to the hot-water circulation passage 51 is disposed at a left portion of the rear hood compartment S2. A refill port is formed at an upper portion of the gas-liquid separation tank 58 and is usually closed by a plug (or a lid) 58a.

The gas-liquid separation tank 58 is provided with an inspection window 58b that is transparent, so that a person standing on the left of the working machine 1 can visually check the water surface position of heating water in the gas-liquid separation tank 58. The gas-liquid separation tank 58 and the hot-water circulation passage 51 can be replenished with the heating water through the refill port that is opened by removing the plug 58a.

As illustrated in FIG. 1, FIG. 2, FIG. 5, and the like, an opening is formed in the left-surface cover member 23a of the hood side cover 23 so as to face the gas-liquid separation tank 58 with the refill port closed. An inspection lid 27 is attached to the left-surface cover member 23a so as to be openable and closable and so as to close the opening.

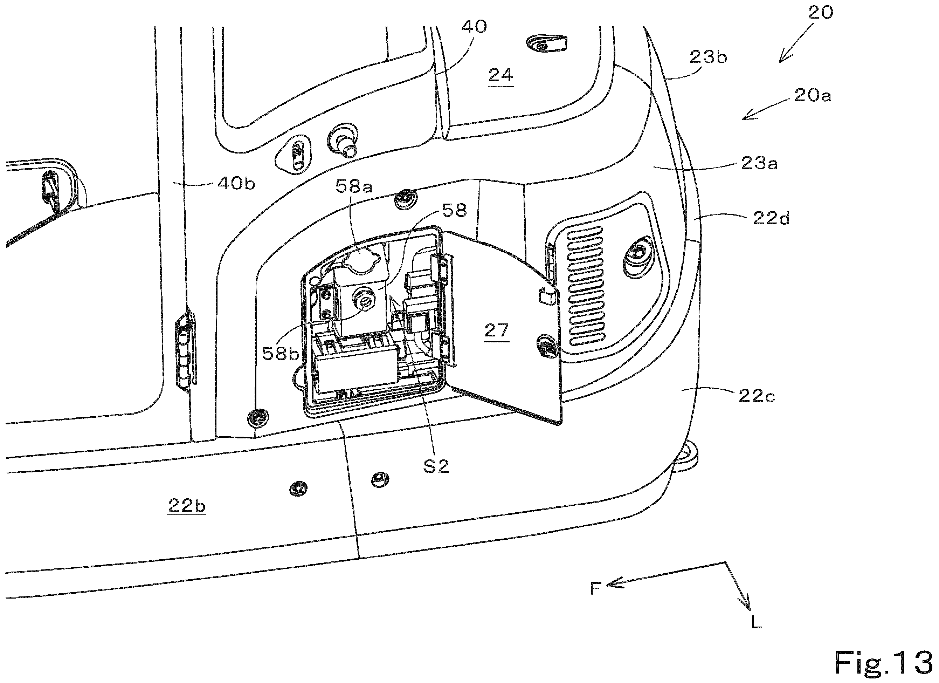

As illustrated in FIG. 13 and the like, a person standing on the left of the working machine 1 can access the gas-liquid separation tank 58 by opening the inspection lid 27. In other words, by opening the inspection lid 27, the plug 58a can be pulled out, and the hot-water circulation passage 51 can be replenished with water as mentioned above. By opening the inspection lid 27 and checking the height of the water surface in the gas-liquid separation tank 58 by looking at the inspection window 58b, the amount of water in the heater 50 (the hot-water circulation passage 51) can be checked.

The gas-liquid separation tank 58 needs to be positioned above components including the hot water pump 53, with a certain height maintained. On the other hand, if the gas-liquid separation tank 58 is too high, it is difficult to perform operations such as the water replenishment through the refill port, the checking of the water surface in the gas-liquid separation tank 58, and the like which have been mentioned above.

Regarding this, in the working machine 1, as described above, the water heating unit 52 and the hot water pump 53 are arranged at sufficiently low positions, that is, in the underfloor compartment S1 below the floor plate member 42. Thus, the gas-liquid separation tank 58 that is disposed higher than these can also be disposed at a height suitable for an operator standing on the left of the working machine 1 to perform the water replenishment operation and the checking of the water surface, which have been mentioned above.

In the front portion of the rear hood compartment S2, the pipes and the like constituting portions of the hot-water circulation passage 51 including a portion of the hot-water circulation passage 51 that extends from the air heating unit 54 to the gas-liquid separation tank 58 are arranged along the hood center cover 25.

The pipes constituting the hot-water delivery passage 51c of the hot-water circulation passage 51 that extends from a delivery port of the hot water pump 53 are connected to the unit case 54a of the air heating unit 54, which is disposed as described above.

The flow regulating valve 55 is disposed inside an inlet portion of the heat exchanger 54b in the unit case 54a of the air heating unit 54. The pipes extending from the delivery port of the hot water pump 53 are connected to the flow regulating valve 55 of the air heating unit 54. As a result, the hot water at a flow rate that is regulated by the flow regulating valve 55 is introduced into the heat exchanger 54b and used for air heating.

As described above, the temperature of the air that is blown from the air outlet 57 into the operation room 41 is adjusted in accordance with the amount of rotation of the temperature adjustment dial 48 from the OFF position (i.e., the set temperature level). This is because the opening of the flow regulating valve 55 is changed in accordance with the set temperature level, which is set by the temperature adjustment dial 47.

In other words, the opening of the flow regulating valve 55 increases as the operating amount increases, and the amount of hot water that flows into the heat exchanger in the air heating unit 54 is increased accordingly, so that the air to be sent to the air outlet 57 is quickly heated. Such a method of changing the flow rate of the hot water can contribute to the configuration of the heater 50 having favorable responsiveness to the operation of the temperature adjustment dial 48.

In contrast, the opening of the flow regulating valve 55 decreases as the set temperature level decreases, and the amount of hot water that is introduced into the heat exchanger 54b is reduced. In this case, when only the flow rate of the hot water is reduced while the flow passage is kept large and the temperature is kept high, there is a possibility that localized boiling will occur.

Accordingly, in the heater 50 of the present embodiment, the opening of the flow regulating valve 55 is changed in accordance with the set temperature level of the temperature adjustment dial 48, and the amount of heat generated by the heat generating element 52b in the water heating unit 52 is changed in accordance with a change in the opening of the flow regulating valve 55.

In other words, the opening of the flow regulating valve 55 decreases by reducing the set temperature level set by the temperature adjustment dial 48, which in turn results in a reduction in the flow rate of the hot water. Along with this, the amount of heat generated by the heat generating element of the water heating unit 52 is also reduced, that is, the temperature of the hot water itself introduced into the air heating unit 54 is reduced, and thus, localized boiling such as that mentioned above is prevented from occurring even if the flow rate is reduced.

The amount of heat generation can be adjusted in the manner described above because the water heating unit 52 is an electric heat generator. In other words, in the case where a heat source of hot water is the heat exhausted by an engine as in the related art, it is difficult to freely adjust the heat exhausted by the engine, and thus, it is difficult to adjust the temperature of the hot water even though the flow rate of the hot water is adjustable. However, in the case of employing such a heat generating element that generates heat by using electric power, it is possible to freely adjust the amount of heat generation, and it is also possible to make the heat generating element not generate heat by stopping supply of the electric power thereto.

By disposing the water heating unit 52 including such a heat generating element in the underfloor compartment S1 below the floor plate member 42 of the cabin 40, which serving as the operation room structure, the heat generated by the heat generating element in the underfloor compartment S1 can also be conducted into the operation room 41 through the floor plate member 42. Therefore, even if the warmed air blown out from the air heating unit 54 through the air outlet 57 escapes through a gap in the cabin 40, the warmed air is supplemented from under the floor, so that the heating effect is improved.

One of the factors that cause the warm air in the operation room 41 to escape to the outside is that the warm air is drawn by the exhaust airflow generated by the rotation of the radiator fan 94a or the oil cooler fan 95a arranged so as to be located rearward of the cabin 40 and escapes through a gap in the operation room 41.

In the case of the present embodiment, since the radiator fan 94a and the oil cooler fan 95a are also electric fans, they can be turned off freely or automatically. Thus, when heating the interior of the operation room 41, it is possible to prevent the warm air in the cabin 40 from escaping by stopping the rotations of the radiator fan 94a and the oil cooler fan 95a.

In the case where heating is not necessary in summer or the like, the heat of the heater 50 can be prevented from being transmitted to the operation room 41 by stopping, in response to the temperature adjustment dial 48 being set to be in the OFF position, the supply of electric power to the heat generating element 52b of the water heating unit 52 such that the amount of heat generated by the heat generating element becomes zero.

FIG. 18 illustrates a control system for electrical equipment that relates to the above-described heater 50 and ensuring of the heating effect of the heater 50. The controller 100 is provided at an appropriate position in, for example, a machine body interior 2 of the working machine 1. The temperature adjustment dial 48, the blower dial 49, the radiator fan switch 101, the oil cooler fan switch 102, and the like each of which serves as input means are connected to an input-side interface of the controller 100.

The sub-battery 63, the heat generating element 52b, the hot water pump 53, the heat exchanger 54b, the blower 54c, the flow regulating valve 55, the radiator fan 94a, the oil cooler fan 95a, and the like are connected to an output-side interface of the controller 100. The flow regulating valve 55 is a solenoid proportional valve and has a structure in which the opening thereof can be proportionally changed by electromagnetic control of a solenoid.

When the temperature adjustment dial 48 is set to be in the OFF position by the operator, the controller 100 cuts off the supply of power from the sub-battery 63 to the heat generating element 52b and the hot water pump 53. In other words, the supply of hot water to the air heating unit 54 is stopped, and thus, the supply of power for operating the heat exchanger 54b is also stopped.

In contrast, when the temperature adjustment dial 48 is turned on, the controller 100 starts the supply of power from the sub-battery 63 to the heat generating element 52b and the hot water pump 53. The controller 100 also electromagnetically controls the solenoid of the flow regulating valve 55 so as to adjust the opening of the flow regulating valve 55 in accordance with the amount of rotation of the temperature adjustment dial 48 (the operating position, the set temperature level), thereby adjusting the amount of the hot water to be supplied to the heat exchanger 54b. The amount of heat generated by the heat generating element 52b is also adjusted in accordance with the amount of rotation (the operating position, the set temperature level) so as to adjust the temperature of the hot water delivered from the hot water pump 53 toward the flow regulating valve 55.

When the blower dial 49 is set to be in the OFF position by the operator, the controller 100 cuts off the supply of power from the sub-battery 63 to the blower 54c. As a result, the air supply to the operation room 41 through the air outlet 57 is stopped.

In contrast, when the blower dial 49 is turned on, the controller 100 starts the supply of power from the sub-battery 63 to the blower 54c. The controller 100 also adjusts the rotational speed of the blower 54c in accordance with the amount of rotation of the blower dial 49 (the operating position, the set temperature level) so as to adjust the amount of air blown into the operation room 41 through the air outlet 57.

The operation of the blower dial 49 can be performed regardless of whether the temperature adjustment dial 48 is turned on or off and the operating position (the operating amount) of the temperature adjustment dial 48. By operating the blower dial 49 when the temperature adjustment dial 48 is in the ON position, the flow rate of the air that has been warmed by the heat exchanger 54b can be adjusted.

The controller 100 determines whether to rotate the radiator fan 94a on the basis of whether the radiator fan switch 101 is turned on or off and determines whether to rotate the oil cooler fan 95a on the basis of whether the oil cooler fan switch 102 is turned on or off.

By arranging the radiator fan switch 101 and the oil cooler fan switch 102, which have been mentioned above, in the operation room 41, the operator can freely turn off these switches so as to stop the rotations of the fans 94a and 95a when the operator desires to improve the heating effect of the heater 50.

The radiator fan switch 101 and the oil cooler fan switch 102 do not need to be operated by the operator and may be switched on and off by automatic control. A conceivable example of the automatic control of these fans for improving the heating effect provided by the heater 50 is control for stopping the rotations of these fans 94a and 95a when it is determined, from the temperature of the cooling water, the temperature of the hydraulic fluid, or the like that is detected while the temperature adjustment dial 48 is in the ON position, that the immediate operation of the radiator 94 or the oil cooler 95 is not necessary.

A working machine 1 as mentioned above includes a machine body 20, a working device 30 that is provided on the machine body 20, a cabin 40 as an operation room structure that is mounted on the machine body 20 and that includes an operation room 41 and a floor plate member 42 as a floor surface body to define a floor surface FS of the operation room 41, and a heater 50 to heat an interior of the operation room 41. The heater 50 includes a heat generating element 52b (a water heating unit 52) as a heat generator to generate heat by using electric power, and one or more hot water circulators (hot-water circulation passage 51, hot water pump 53, and/or the like) to cause water heated as a result of the heat generation of the heat generating element 52b to circulate. Among components of the heater 50, at least the water heating unit 52 is located in an underfloor compartment S1, which is a space in the machine body 20 below the floor plate member 42.

According to the above configuration, the heating efficiency can be improved by the heat generation of the heat generating element 52b (heat generator) in the water heating unit 52, which is located in the underfloor compartment S1 (the space in the machine body 20) below the floor plate member 42 (floor surface body), in addition to the heating effect provided by the hot water of the heater 50. Employing a structure in which the heat generating element 52b (heat generator) generates heat by using electric power can prevent the influence of the heat generation of the heat generating element 52b (heat generator) on the interior of the operation room 41 by turning off when heating is not necessary in summer or the like, so that the heat generated by the heat generating element 52b can be prevented from being transmitted to the interior of the operation room 41. Using a dead space under the floor for the arrangement of the water heating unit 52 including the heat generating element 52b (heat generator) leads to a reduction in the volume of a space for arranging other equipment, contributing to the compactness of the entire working machine. By positioning the passage through which the hot water circulates at a relatively low portion of the machine body, the degree of freedom regarding the arrangement of the gas-liquid separation tank 58 and the refill port for water replenishment.

The working machine 1 further includes an operation member (temperature adjustment dial 48) for indoor temperature adjustment that is located in the operation room 41. The hot water circulator(s) include(s) a hot water pump 53 that is a pump for delivery of hot water and that is driven by electric power. The operation member (temperature adjustment dial 48) also defines as an operation member operable to simultaneously set the heat generating element 52b (heat generator) and the hot water pump 53 to an energized state, and simultaneously set them to a non-energized state.

As described above, by enabling a simultaneous operation of energization and deenergization of the heat generating element 52b (heat generator) of the heater 50 and the hot water pump 53, when the heater 50 does not perform a heating operation, the heat generating element 52b and the hot water pump 53 are de-energized simultaneously, thereby achieving an energy-saving effect.

The operation member is a temperature adjustment dial 48 that is a dial switch operable to set a set temperature level which is changed by changing its operating position. The amount of heat generated by the heat generating element 52b (heat generator) increases as the set temperature level set by the temperature adjustment dial 48 increases.

As described above, since the simultaneous operation of the energization and deenergization of the water heating unit 52 (heat generator) and the hot water pump 53 can be performed by operating a dial switch which is usually provided, the operator can easily perform an operation, and the cost can be reduced because no special operation member is added.

The working machine 1 further includes a battery (or batteries) 90a that is (or are) provided on or in the machine body 20 and an electric motor 92 that is provided on or in the machine body 20 and driven by the electric power supplied from the battery (or batteries) 90a. The working device 30 is driven by an output of the electric motor 92, and the heat generating element 52b (heat generator) generates heat by using the electric power supplied from the battery (or batteries) 90a.

As a result, when incorporating the heater 50, which serves as a hot-water heater, into the working machine 1 that serves as an electric working machine and that includes the electric motor 92 serving as a prime mover, the battery (or batteries) 90a for supplying the electric power to the electric motor 92, which serves (or serve) as a prime mover, can be used as a power supply.

The working machine 1 uses the battery (or batteries) 90a as a main battery (or batteries) and includes a sub-battery 63 that is different from the main battery (or batteries) 90a and that is provided on or in the machine body 20. The sub-battery 63 is charged with the electric power from the battery (or batteries) 90a which serves (or serve) as the main battery (or batteries). The heat generating element 52b (heat generator) generates heat by using electric power supplied from the sub-battery 63.

As a result, the electric power can be stably supplied to the electrical equipment of the heater 50 regardless of the operational state of the working device 30. The sub-battery 63 can be charged with the electric power from the main battery (or batteries) 90a when, for example, the main battery (or batteries) 90a has (or have) surplus electric power, so that it is possible to prevent a situation where the electric power for the heater 50 is insufficient.

The working machine 1 further includes a radiator 94 to cool the battery (or batteries) 90a and the electric motor 92, and the radiator 94 includes an electric radiator fan 94a that is switchable between an energized state and a non-energized state.

An engine radiator fan of the related art continuously rotates while an engine is running, and the airflow generated by the engine radiator fan may sometimes cause deterioration in the heating efficiency in the operation room 41. However, in the working machine 1, the electric motor 92 serves as the prime mover, and the radiator fan 94a cools the electric motor 92 and the batteries 90a for supplying the electric power to the electric motor 92. Since an electric fan is employed as the radiator fan 94a, the rotation of the radiator fan 94a can be stopped by de-energizing the radiator fan 94a, and by stopping the rotation, the heating effect in the operation room 41 can be improved.

The working machine 1 further includes a hydraulic pump 93 that is driven by an output of the electric motor 92 so as to deliver a hydraulic fluid, a hydraulic actuator (or actuators) that is (or are) driven by the hydraulic fluid so as to cause the working device 30 to operate, and an oil cooler 95 (hydraulic fluid cooler) to cool the hydraulic fluid. The oil cooler 95 includes an oil cooler fan 95a that is an electric hydraulic-fluid cooling fan switchable between an energized state and a non-energized state.

As described above, since the oil cooler fan 95a (hydraulic-fluid cooling fan) is also an electric fan, the rotation of the oil cooler fan 95a can be stopped by de-energizing the oil cooler fan 95a, and by stopping the rotation, the heating effect in the operation room 41 can be improved.

The working machine 1 further includes a PTC heater defining the heat generating element 92b (heat generator).

By using a PTC heater as mentioned above, the cost can be suppressed.

A working machine 1 includes a machine body 20, a working device 30 that is provided on the machine body 20, an operator's seat 44 that is provided on the machine body 20, and a heater 50 that heats an area around the operator's seat 44. The heater 50 includes a heat generating element 52b (water heating unit 52) that is a heat generator to generate heat by using electric power, and a hot water circulator (or circulators) (hot-water circulation passage 51, hot water pump 53, and/or the like) to cause water heated as a result of the heat generation of the heat generating element 52b to circulate. The at least one hot water circulator includes a flow regulating valve 55 that is configured to regulate a flow rate of hot water by changing its opening. An amount of the heat generating element 52b is changed in accordance with a change in the opening of the flow regulating valve 55.

With the above-described configuration, in addition to regulating the flow rate of the hot water by changing the opening of the flow regulating valve as in the related art, the amount of heat generated by the heat generating element 52b (heat generator) is also adjusted in response to a temperature adjustment operation (rotation of a dial switch or the like) performed by the operator in the operator's seat 44, so that the temperature of the hot water is controlled. Therefore, for example, when the flow rate of the hot water is reduced by reducing the opening of the flow regulating valve 55, the temperature of the hot water can be reduced by reducing the amount of heat generated by the heat generating element 52b (heat generator), and the hot water with the reduced flow rate can be prevented from locally boiling.

The amount of heat generated by the heat generating element 52b (heat generator) decreases as the opening of the flow regulating valve 55 decreases.

With the above-described configuration, when the flow rate is reduced by reducing the opening of the flow regulating valve 55, the amount of heat generated by the heat generating element 52b (heat generator) is reduced, and thus, the above-mentioned localized boiling of the hot water is prevented from occurring. As a result, damage to the hot water pump 53 due to boiling of the hot water can be avoided, and the durability of the hot water pump 53 can be improved.

The working machine 1 includes a PTC heater defining the heat generating element 52b (the heat generator).

By employing a PTC heater as the heat generating element 52b (the heat generator) as mentioned above, the cost can be suppressed.

The working machine 1 includes an operation member (temperature adjustment dial 48) located around the operator's seat 44 and that is operable to control a set temperature level set thereby. The flow regulating valve 55 is operable to control the opening in accordance with the set temperature level set by the operation member (temperature adjustment dial 48).

With the above configuration, by operating the operation member (temperature adjustment dial 48) for adjusting the opening of the flow regulating valve 55, both the adjustment of the opening of the flow regulating valve 55 and the adjustment of the amount of heat generated by the heat generating element 52b (heat generator) are simultaneously performed, and it is not necessary to provide another operation member or perform another operation to adjust the amount of heat generated by the heat generating element 52b (heat generator). Therefore, regarding the heater 50, an effect of suppressing a problem such as that described above is achieved, and the operability for a person who operates the heater 50 is improved.

The operation member is a temperature adjustment switch 48 (dial switch) operable to set the set temperature level that is changed by changing its operating position. The opening of the flow regulating valve 55 increases as the set temperature level set by the temperature adjustment switch 48 (dial switch) increases.

As the set temperature level set by the temperature adjustment dial 48 increases, the opening of the flow regulating valve 55 increases, and the amount of heat generated by the heat generating element 52b (heat generator) also increases. In other words, as an operation for achieving the above-mentioned effect of the heater 50, a temperature adjustment method is employed as in the related art, and the operator can enjoy favorable operability as in the related art without experiencing a sense of discomfort.

The working machine 1 includes a battery (or batteries) 90a that is provided on or in the machine body 20, and an electric motor 92 that is provided on or in the machine body 20 and driven by electric power supplied from the battery (or batteries) 90a. The working device 30 is driven by the output of the electric motor 92, and the heat generating element 52b (the heat generator) generates heat by using the electric power supplied from the battery (or batteries) 90a.

As a result, when incorporating the heater 50, which serves as a hot-water heater, into the working machine 1 that serves as an electric working machine and that includes the electric motor 92 serving as a prime mover, the battery (or batteries) 90a for supplying the electric power to the electric motor 92, which serves as a prime mover, can be used as a power supply.

The working machine 1 uses the battery (or batteries) 90a defining a main battery (or batteries) and includes a sub-battery 63 that is different from the main battery (or batteries) 90a and that is provided on or in the machine body 20. The sub-battery 63 is charged with the electric power from the battery (or batteries) 90a defining the main battery (or batteries). The heat generating element 52b (heat generator) generates heat by using the electric power supplied from the sub-battery 63.

As a result, the electric power can be stably supplied to the electrical equipment of the heater 50 regardless of the operational state of the working device 30. The sub-battery 63 can be charged with the electric power from the main battery (or batteries) 90a when, for example, the main battery (or batteries) 90a has (or have) surplus electric power, so that it is possible to prevent a situation where the electric power for the heater 50 is insufficient.

Although the present invention has been described above, the embodiment disclosed herein is an example in all respects, and the present invention is not to be considered limited to the embodiment. The scope of the present invention is to be determined not by the above description, but by the claims, and it is intended that meanings equal to the claims and all the modifications within the scope of the claims are included in the scope of the present invention.

In the above-described embodiment, a case has been described in which the present invention is applied to a slewable working machine (a backhoe). However, the target to which the present invention is to be applied is not limited to this, and for example, the present invention may be applied to any other construction machine such as a wheel loader, a compact track loader, a skid-steer loader, or the like or may be applied to an agricultural machine such as a tractor, a combine, a rice transplanter, a lawn mower, or the like.

### Reference Signs List

- 1: working machine (slewable working machine)
- 20: machine body (slewing base)
- 30: working device
- 40: cabin (operation room structure)
- 41: operation room
- 44: operator's seat
- 48: temperature adjustment dial (operation member)
- 50: heater
- 51: hot-water circulation passage (hot water circulator)
- 52: water heating unit
- 52b: heat generating element (heat generator)
- 53: hot water pump (hot water circulator)
- 63: sub-battery
- 90a: battery (main battery)
- 92: electric motor
- 93: hydraulic pump
- 94: radiator
- 94a: radiator fan
- 95: oil cooler (hydraulic fluid cooler)
- 95a: oil cooler fan (hydraulic-fluid cooling fan)

## Claims

1. A working machine comprising:
a machine body;
a working device provided on the machine body;
an operation room structure mounted on the machine body, the operation room structure including an operation room and a floor surface body to define a floor surface of the operation room; and
a heater to heat an interior of the operation room, the heater including:
a heat generator to generate heat by using electric power; and
a hot water circulator to cause water heated as a result of heat generation of the heat generator to circulate; wherein
at least the heat generator among components of the heater is located in a space in the machine body below the floor surface body.

2. The working machine according to claim 1, comprising:
an operation member for indoor temperature adjustment located in the operation room, wherein
the hot water circulator includes a pump for delivery of hot water, the pump being to be driven by electric power, and
the operation member also defines an operation member operable to simultaneously set the heat generator and the pump to an energized state, and simultaneously set the heat generator and the pump to a non-energized state.

3. The working machine according to claim 2, wherein
the operation member is a dial switch operable to set a set temperature level that is changed by changing its operating position, and
the amount of heat generated by the heat generator increases as the set temperature level set by the operation member increases.

4. The working machine according to any one of claims 1 to 3, comprising:
an operator's seat provided in the operation room, wherein
the hot water circulator includes a flow regulating valve operable to change its opening to control a flow rate of hot water, and
an amount of heat generated by the heat generator is changed in accordance with a change in the opening of the flow regulating valve.

5. A working machine comprising:
a machine body;
a working device provided on the machine body;
an operator's seat provided on or in the machine body; and
a heater to heat an area around the operator's seat, the heater including:
a heat generator to generate heat by using electric power; and
a hot water circulator to cause water heated as a result of heat generation of the heat generator to circulate, wherein
the hot water circulator includes a flow regulating valve operable to change its opening to control a flow rate of hot water, and
an amount of heat generated by the heat generator is changed in accordance with a change in the opening of the flow regulating valve.

6. The working machine according to claim 4 or 5, wherein
the amount of heat generated by the heat generator decreases as the opening of the flow regulating valve decreases.

7. The working machine according to any one of claims 4 to 6, comprising:
an operation member located around the operator's seat, the operation member being operable to change its operating position, wherein
the flow regulating valve is operable to control the opening in accordance with the operating position of the operation member.

8. The working machine according to claim 7, wherein
the operation member is a dial switch operable to set a set temperature level that is changed by changing its operating position, and
the opening of the flow regulating valve increases as the set temperature level set by the dial switch increases.

9. The working machine according to any one of claims 1 to 8, comprising:
a battery provided on or in the machine body; and
an electric motor provided on or in the machine body and to be driven by electric power supplied from the battery, wherein
the working device is driven by an output of the electric motor, and
the heat generator generates heat by using electric power supplied from the battery.

10. The working machine according to claim 9, wherein
the battery defines a main battery,
a sub-battery different from the main battery is provided on or in the machine body,
the sub-battery is charged with electric power from the main battery, and
the heat generator generates heat by using electric power supplied from the sub-battery.

11. The working machine according to claim 9 or 10, comprising:
a radiator to cool the battery and the electric motor, wherein
the radiator includes an electric radiator fan that is switchable between an energized state and a non-energized state.

12. The working machine according to any one of claims 9 to 11, comprising:
a hydraulic pump to deliver a hydraulic fluid by being driven by an output of the electric motor;
a hydraulic actuator to cause the working device to operate by being driven by the hydraulic fluid; and
a hydraulic fluid cooler to cool the hydraulic fluid, wherein
the hydraulic fluid cooler includes an electric hydraulic-fluid cooling fan that is switchable between an energized state and a non-energized state.

13. The working machine according to any one of claims 1 to 12, comprising:
a PTC heater defining the heat generator.
